# EUROPEAN PATENT APPLICATION

(11) **EP 3 817 405 A1**
(43) Date of publication of application: **05.05.2021**
(21) Application number: 19826998.7
(22) Date of filing: 22.05.2019
(51) Int. Cl.: H04S 7/00, B60R 11/02

(54) **AUDIO SIGNAL PROCESSING DEVICE, MOVING DEVICE, METHOD, AND PROGRAM**

(30) Priority: 26.06.2018 JP 2018121048
(71) Applicant: Sony Corporation, 108-0075 Tokyo (JP)
(72) Inventor: TANAKA, Takehiko, Tokyo 141-8610 (JP); YOSHIDA, Daisuke, Tokyo 141-8610 (JP); SHIRAISHI, Goro, Tokyo 141-8610 (JP); ICHIKAWA, Nozomi, Tokyo 141-8610 (JP)
(74) Representative: Witte, Weller & Partner Patentanwälte mbB
(86) International application number: PCT/JP2019/020275
(87) International publication number: WO 2020/003819

(57) **Abstract**

A sound signal processing device performs sound field control by controlling each virtual sound source position of a primary sound source and an ambient sound source that are separated sound signals obtained from an input sound source, in accordance with changes in the velocity and the traveling direction of an automobile. The sound signal processing device includes: a velocity information acquisition unit that acquires velocity information about a mobile apparatus; a steering information acquisition unit that acquires steering information about the mobile apparatus; and a sound control unit that controls output sounds from speakers disposed at a plurality of different positions in the mobile apparatus. The sound control unit performs sound field control by controlling the respective virtual sound source positions of the primary sound source and the ambient sound source that are separated sound signals obtained from the input sound source, in accordance with the velocity information acquired by the velocity information acquisition unit and the steering information acquired by the steering information acquisition unit.

## Description

### TECHNICAL FIELD

The present disclosure relates to a sound signal processing device, a mobile apparatus, a method, and a program. More particularly, the present disclosure relates to a sound signal processing device, a mobile apparatus, a method, and a program for performing sound field control suitable for the moving velocity and the like of an automobile by controlling outputs of a plurality of speakers provided in the automobile, for example.

### BACKGROUND ART

A plurality of speakers is installed in most automobiles, so that a sound reproduction process for providing a realistic feeling can be performed.

For example, a user such as the driver can adjust the balance between left and right speakers and the balance between front and rear speakers, to form a sound field as desired. However, in many conventional systems, sound reproduction is performed in a fixed sound field generated from one adjustment result, unless the user changes the adjustment.

On the other hand, an automobile makes various movements such as acceleration, deceleration, a left turn, and a right turn, under the driving control of the driver. In a case where there are such movements of the automobile, the listener might sense unnaturalness when sound reproduction is performed in a fixed sound field.

Note that Patent Document 1 (WO 2006/006553 A) discloses a configuration that controls output sounds (notification sounds) from speakers in accordance with the behavior of the vehicle such as acceleration of the vehicle, for example, and thus, notifies the user of the acceleration of the vehicle. However, the configuration disclosed in this document is merely a configuration for controlling notification sounds for informing the user of the behavior of the vehicle, and does not make the user sense natural changes in the sound field in accordance with the behavior of the vehicle. Further, the disclosed configuration does not perform sound field control associated with changes in the user's field of view that changes with the behavior of the vehicle.

### CITATION LIST

### PATENT DOCUMENTS

Patent Document 1: WO 2006/006553 A
Patent Document 2: US 9,749,769

### SUMMARY OF THE INVENTION

### PROBLEMS TO BE SOLVED BY THE INVENTION

The present disclosure is to provide a sound signal processing device, a mobile apparatus, a method, and a program for controlling sound outputs from a plurality of speakers in a vehicle in accordance with changes and the like in the velocity and the traveling direction of the vehicle, to enable a user to sense natural changes in a sound field in accordance with the behavior of the vehicle.

Further, a configuration according to an embodiment of the present disclosure is to provide a sound signal processing device, a mobile apparatus, a method, and a program for controlling sound outputs from a plurality of speakers in a vehicle in accordance with the behavior of the vehicle such as changes in the velocity and the traveling direction of the vehicle, to perform sound field control in conjunction with changes in the point of view and the field of view of an occupant (user) such as the driver.

### SOLUTIONS TO PROBLEMS

A first aspect of the present disclosure lies in
a sound signal processing device that includes:
a behavior information acquisition unit that acquires behavior information about a mobile apparatus; and
a sound control unit that controls output sounds from speakers disposed at a plurality of different positions in the mobile apparatus,
in which the sound control unit performs sound field control by controlling a virtual sound source position of each separated sound signal obtained from an input sound source, in accordance with information acquired by the behavior information acquisition unit.

Further, a second aspect of the present disclosure lies in
a mobile apparatus that includes:
an operation unit that changes the behavior of the mobile apparatus;
a behavior information acquisition unit that acquires behavior information about the mobile apparatus; and
a sound control unit that controls output sounds from speakers disposed at a plurality of different positions in the mobile apparatus,
in which the sound control unit performs sound field control by controlling a virtual sound source position of each separated sound signal obtained from an input sound source, in accordance with information acquired by the behavior information acquisition unit.

Furthermore, a third aspect of the present disclosure lies in
a sound signal processing method that is implemented in a sound signal processing device, and includes:
a behavior information acquiring step in which a behavior information acquisition unit acquires behavior information about a mobile apparatus; and
a sound controlling step in which a sound control unit controls output sounds from speakers disposed at a plurality of different positions in the mobile apparatus,
in which the sound controlling step includes performing sound field control by controlling a virtual sound source position of each separated sound signal obtained from an input sound source, in accordance with the behavior information acquired in the behavior information acquiring step.

Further, a fourth aspect of the present disclosure lies in
a sound signal processing method that is implemented in a mobile apparatus, and includes:
a step in which a sensor detects the presence of an object approaching the mobile apparatus; and
a sound controlling step in which a sound control unit controls output sounds from speakers disposed at a plurality of different positions in the mobile apparatus,
in which the sound controlling step includes performing sound field control by controlling a virtual sound source position of each separated sound signal obtained from an input sound source, in accordance with approaching object presence information acquired by the sensor.

Furthermore, a fifth aspect of the present disclosure lies in
a program for causing a sound signal processing device to perform sound signal processing that includes:
a behavior information acquiring step in which a behavior information acquisition unit is made to acquire behavior information about a mobile apparatus; and
a sound controlling step in which a sound control unit is made to control output sounds from speakers disposed at a plurality of different positions in the mobile apparatus,
in which the sound controlling step includes causing the sound control unit to perform sound field control by controlling a virtual sound source position of each separated sound signal obtained from an input sound source, in accordance with the behavior information acquired in the behavior information acquiring step.

Note that the program of the present disclosure is a program that can be provided in a computer-readable format from a storage medium or a communication medium to an information processing device or a computer system that can execute various program codes, for example. As such a program is provided in a computer-readable format, processes according to the program are performed in an information processing device or a computer system.

Other objects, features, and advantages of the present disclosure will be made apparent by the embodiments of the present disclosure described below and the detailed descriptions with reference to the accompanying drawings. Note that, in this specification, a system is a logical assembly of a plurality of devices, and does not necessarily mean devices with different structures incorporated into one housing.

### EFFECTS OF THE INVENTION

A configuration of one embodiment of the present disclosure performs sound field control by controlling each virtual sound source position of a primary sound source and an ambient sound source that are separated sound signals obtained from an input sound source, in accordance with changes in the velocity and the traveling direction of an automobile.

Specifically, the configuration includes: a velocity information acquisition unit that acquires velocity information about a mobile apparatus; a steering information acquisition unit that acquires steering information about the mobile apparatus; and a sound control unit that controls output sounds from speakers disposed at a plurality of different positions in the mobile apparatus, for example. The sound control unit performs sound field control by controlling the respective virtual sound source positions of the primary sound source and the ambient sound source that are separated sound signals obtained from the input sound source, in accordance with the velocity information acquired by the velocity information acquisition unit and the steering information acquired by the steering information acquisition unit.

With this configuration, it becomes possible to perform sound field control by controlling the respective virtual sound source positions of a primary sound source and an ambient sound source that are separated sound signals obtained from an input sound source, in accordance with changes in the velocity and the traveling direction of an automobile.

Note that the advantageous effects described in this specification are merely examples, and the advantageous effects of the present technology are not limited to them and may include additional effects.

### BRIEF DESCRIPTION OF DRAWINGS

Fig. 1 is a diagram for explaining conventional sound field control, and sound field control using a sound field control process (monopole synthesis) to be used in processes according to the present disclosure.
Fig. 2 is a diagram for explaining a sound field control process (monopole synthesis) to be used processes according to the present disclosure.
Fig. 3 is a diagram for explaining examples of settings of virtual sound source positions and settings of a sound field.
Fig. 4 is a table for explaining the types of sound signals to be output from a sound separation unit to an output signal generation unit.
Fig. 5 is a diagram for explaining examples of settings of virtual sound source positions and settings of a sound field.
Fig. 6 is a diagram for explaining examples of settings of virtual sound source positions and settings of a sound field.
Fig. 7 is a diagram for explaining an example configuration for setting virtual sound sources at a plurality of different locations for one separated sound signal.
Fig. 8 is a diagram showing an example configuration of a mobile apparatus according to the present disclosure.
Fig. 9 is a diagram for explaining a specific example of the configuration of a control unit of a sound signal processing device and processes.
Fig. 10 is a diagram for explaining specific examples of virtual sound source positions and sound field control depending on the moving velocity of the vehicle.
Fig. 11 is a diagram for explaining specific examples of virtual sound source positions and sound field control depending on the moving velocity of the vehicle.
Fig. 12 is a diagram for explaining a specific example of virtual sound source positions and sound field control depending on the moving velocity of the vehicle.
Fig. 13 is a diagram for explaining a specific example of virtual sound source positions and sound field control depending on the moving velocity of the vehicle.
Fig. 14 is a diagram for explaining specific examples of virtual sound source positions and sound field control depending on steering (wheel) setting information about the vehicle.
Fig. 15 is a diagram for explaining specific examples of virtual sound source positions and sound field control depending on steering (wheel) setting information about the vehicle.
Fig. 16 is a diagram for explaining a specific example of virtual sound source positions and sound field control depending on steering (wheel) setting information about the vehicle.
Fig. 17 is a diagram for explaining a specific example of virtual sound source positions and sound field control depending on steering (wheel) setting information about the vehicle.
Fig. 18 is a diagram for explaining specific examples of virtual sound source positions and sound field control for warning the driver of the vehicle.
Fig. 19 is a diagram for explaining a specific example of virtual sound source positions and sound field control for warning the driver of the vehicle.
Fig. 20 is a diagram for explaining virtual sound source positions, and the configuration of a control unit that performs sound field control and its processes for warning the driver of the vehicle.
Fig. 21 is a flowchart for explaining a sequence in a process to be performed by a sound signal processing device according to the present disclosure.

### MODE FOR CARRYING OUT THE INVENTION

The following is a detailed description of a sound signal processing device, a mobile apparatus, a method, and a program of the present disclosure, with reference to the drawings. Note that explanation will be made in the following order.
1. Sound field control process to be used in processes according to the present disclosure
2. Example configurations of a mobile apparatus and a sound signal processing device of the present disclosure, and example processes therein
3. Specific examples of virtual sound source positions and sound field control depending on the moving velocity of the vehicle
4. Specific examples of virtual sound source positions and sound field control depending on steering (wheel) setting information about the vehicle
5. Specific examples of virtual sound source positions and sound field control for issuing a warning
6. Sequence of processes to be performed by the sound signal processing device
7. Summary of the configuration of the present disclosure

### [1. Sound Field Control Process to Be Used in Processes According to the Present Disclosure]

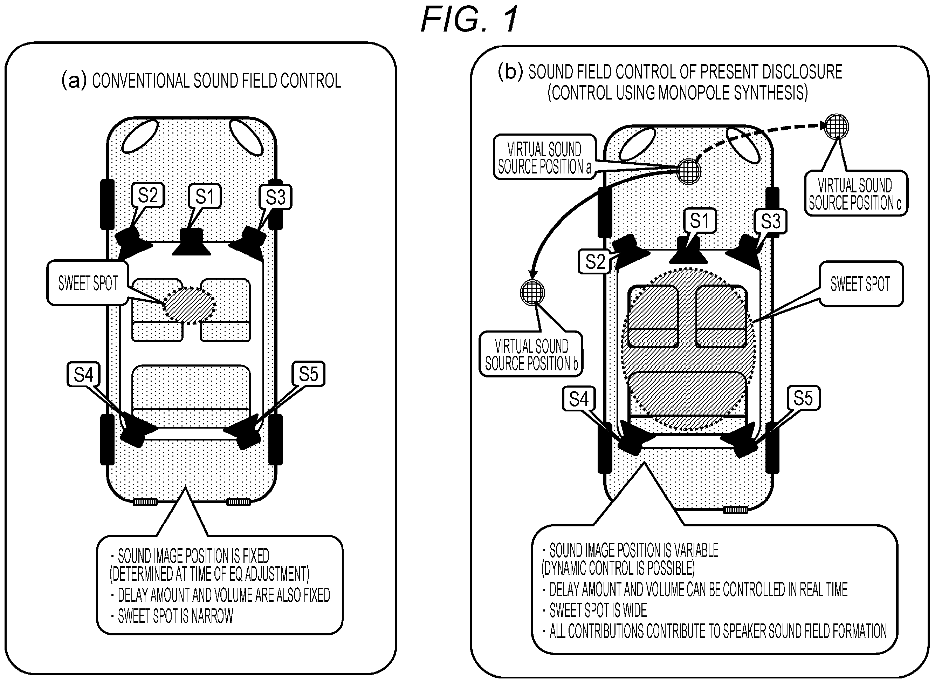

First, a sound field control process (Monopole Synthesis) to be used in processes according to the present disclosure is described, with reference to Fig. 1 and the drawings that follow.

Fig. 1 is a diagram showing two examples in which sound field control is performed by controlling outputs from a plurality of speakers provided in a vehicle as described below.
(a) Conventional sound field control
(b) Sound field control process (control using Monopole Synthesis) to be used in processes according to the present disclosure

In both configurations (a) and (b), a vehicle is equipped with five speakers (S1 to S5).

In the conventional sound field control configuration (a), the user adjusts the sound volumes and the delay amounts of the five speakers (S1 to S5), so that a reproduction process with one sound field formed is performed.

In this case, the user can adjust the sound field. In a conventional car audio system, however, the sweet spot in a region on the inner side of the speakers can only be controlled with time alignment among the respective speakers, and the sweet spot in this case is a narrow region.

Note that a sound field means a space in which sound exists. By controlling a sound field, it is possible to form a more realistic sound reproduction space. If the sound source was recorded in a concert hall, it is ideal to form a sound field that makes users feel the spread of sound as if there were a concert hall in front of you. Also, if the sound source was recorded in a small club with live music, it is ideal to form a sound field as if listening to music in a small club. Further, if the sound source is formed with sounds such as the sound of birds and the murmur of a stream in natural environments, for example, it is required to form a sound field having expanses as if in vast nature.

Note that a sweet spot is a space in which a predetermined ideal sound field can be felt. In the conventional sound field control configuration shown in Fig. 1 (a), the sweet spot is narrow.

This is because the sound volumes and delay amounts of the five speakers (S1 to S5) need be adjusted speaker by speaker.

In the sound field control process (Monopole Synthesis application control) (b) to be used in processes according to the present disclosure, on the other hand, the sound volumes and delay amounts of the five speakers (S1 to S5) are adjusted not on a speaker basis, but for each kind of sound included in speaker outputs.

A control configuration in which sound volumes and delay amounts are adjusted for each type (category) of sound included in speaker outputs is called monopole synthesis. Monopole synthesis is disclosed in US 9,749,769, which is a US patent application filed by the applicant in the past and has been patented in the United States.

The process according to the present disclosure described below uses this monopole synthesis to perform sound field control.

As shown in Fig. 1 (b), in sound field control using monopole synthesis, virtual sound source positions can be freely moved. Furthermore, the moving of the virtual sound source positions can be made for each type (category) of sound output from the speakers.

As sound volumes and delay amounts are adjusted for each speaker and for each kind (category) of sound output from each speaker, the virtual sound source positions can be freely arranged for each kind (category) of sound output from the speakers. As such control is performed, the sweet spot can be made larger accordingly.

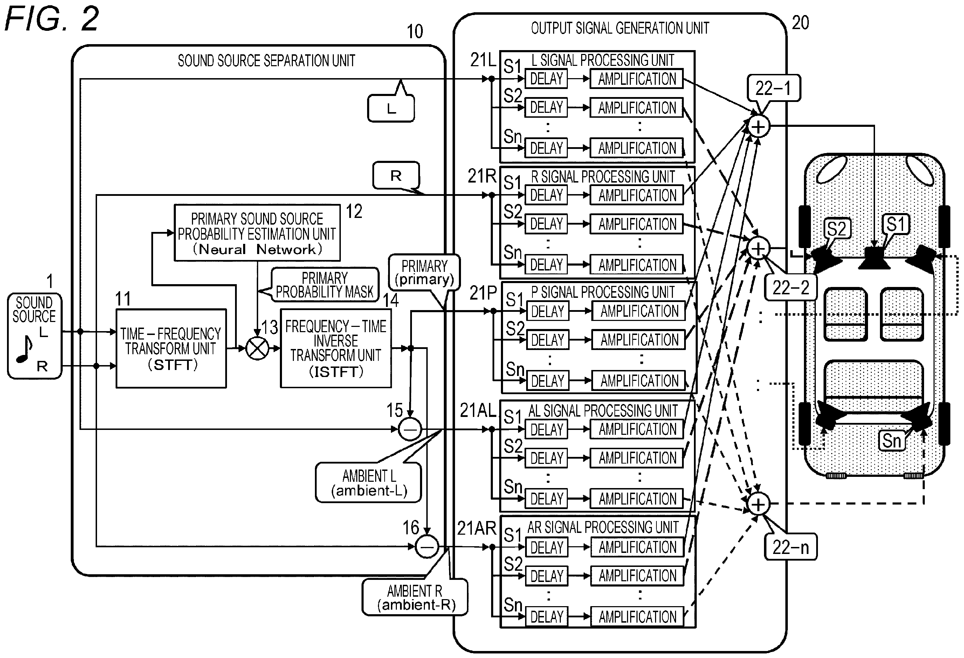

Referring now to Fig. 2, an example configuration of a sound signal processing device that enables output signal control using monopole synthesis, or moving of virtual sound source positions as shown in Fig. 1 (b), for example, is described.

Fig. 2 is a diagram showing an example configuration of a sound signal processing device that performs sound signal control using monopole synthesis.

As shown in Fig. 2, the sound signal processing device includes a sound source separation unit 10 that inputs a sound source 1, and an output signal generation unit 20 that receives an input of a plurality of kinds of sounds (separated sound signals) generated by the sound source separation unit 10 and generates output signals of the respective speakers.

An example in which stereo signals of the two channels of L and R are used as the sound source 1 is described herein. However, this is merely an example, and the sound source 1 is not necessarily signals of the two channels of L and R. Instead, monaural signals and multi-channel sound signals of three or more channels can also be used.

The L and R signals of the sound source 1 are input to the sound source separation unit 10. On the basis of the L and R signals of the sound source 1, the sound source separation unit 10 generates the five kinds of sound signals listed below, and outputs these sound signals to the output signal generation unit 20.
(1) L signal
(2) R signal
(3) Primary signal
(4) Ambient L signal
(5) Ambient R signal

The L signal and the R signal are the L and R sound signals of the sound source 1.

The primary signal, the ambient L signal, and the ambient R signal are sound signals generated by the sound source separation unit 10 on the basis of the L and R signals of the sound source 1.

The L and R signals of the sound source 1 are input to the time-frequency transform unit (STFT: Short Time Fourier Transform) 11. The time-frequency transform unit (STFT) 11 transforms the L and R sound signals (time domain sound signals) of the sound source 1 into a time frequency domain signal. From the time frequency domain sound signal that is the transform result data, the distribution state of the sound signal at each frequency at each time can be analyzed.

The time frequency domain sound signal generated by the time-frequency transform unit (STFT) 11 is output to a primary sound source probability estimation unit (Neural Network) 12 and a multiplier 13.

Using learning data generated beforehand, the primary sound source probability estimation unit (Neural Network) 12 estimates the probability of being a primary sound source for each sound signal at each time and each frequency included in the respective L and R signals of sound source 1. The primary sound source is the main sound source included in the L and R signals of the sound source 1. Specifically, in the case of a sound source such as a musical piece formed with a vocal and sounds of various musical instruments, for example, the vocal sound is the primary sound source. Also, in the case of an environmental sound formed with the sound of birds, the murmur of a stream, and the like, the sound of birds is the primary sound source.

Note that a primary sound source extraction process to be performed at the primary sound source probability estimation unit (Neural Network) 12 is performed on the basis of the data of the results of a learning process conducted in advance. Using the learning data generated in advance, which is the data of the results of a primary sound source extraction process performed with various sound sources, the primary sound source probability estimation unit (Neural Network) 12 estimates the probability of a signal being the primary source, for each sound signal at each time and each frequency included in the L and R signals of the input sound source 1.

On the basis of the estimate, the primary sound source probability estimation unit (Neural Network) 12 generates a primary probability mask, and outputs the primary probability bask to the multiplier 13.

The primary probability mask is a mask in which probability estimate values from a sound signal having a high probability of being the primary sound source to a sound signal having a low probability of being the primary sound source, such as values from 1 to 0, are set for the sound signals at the respective times and the respective frequencies, for example.

At the multiplier 13, the time frequency domain sound signal generated by the time-frequency transform unit (STFT) 11 is multiplied by the primary probability mask generated by the primary sound source probability estimation unit (Neural Network) 12, and the result of the multiplication is input to a frequency-time inverse transform unit (ISTFT: Inverse Short Time Fourier Transform) 14.

The frequency-time inverse transform unit (ISTFT) 14 receives an input of the result of the multiplication of the time frequency domain sound signal generated by the time-frequency transform unit (STFT) 11 by the primary probability mask generated by the primary sound source probability estimation unit (Neural Network) 12, and performs a frequency-time inverse transform process (ISTFT). That is, a process of restoring the time frequency domain signal to the original time domain sound signal is performed.

Note that a sound signal that is the result of multiplication of a time domain sound signal generated by the frequency-time inverse transform unit (ISTFT) 14 by a primary probability mask, and has a higher probability of being the sound signal (a primary sound signal) associated with the primary sound source has a greater output, and a sound signal having a lower probability of being the sound signal (a primary sound signal) associated with the primary sound source has a smaller output.

The output of the frequency-time inverse transform unit (ISTFT) 14 is output as the primary sound signal to the output signal generation unit 20.

The output of the frequency-time inverse transform unit (ISTFT) 14 is further output to a subtraction unit 15 and a subtraction unit 16.

The subtraction unit 15 performs a process of subtracting the primary sound signal, which is the output of the frequency-time inverse transform unit (ISTFT) 14, from the L signal of the sound source 1. This subtraction process is a process of subtracting the primary sound signal from the sound signal included in the L signal, and is a process of acquiring and extracting a signal other than the primary sound signal included in the L signal. That is, this subtraction process is a process of calculating a sound signal of an ambient sound or the like that is not the main sound source.

The signal calculated by the subtraction unit 15 is an ambient L signal. The ambient L signal is a sound signal whose primary component is the ambient sound other than the main sound included in the L signal of the sound source 1.

Further, the subtraction unit 16 performs a process of subtracting the primary sound signal, which is the output of the frequency-time inverse transform unit (ISTFT) 14, from the R signal of the sound source 1. This subtraction process is a process of subtracting the primary sound signal from the sound signal included in the R signal, and is a process of acquiring and extracting a signal other than the primary sound signal included in the R signal. That is, this subtraction process is a process of calculating a sound signal of an ambient sound or the like that is not the main sound source.

The signal calculated by the subtraction unit 15 is an ambient R signal. The ambient R signal is a sound signal whose primary component is the ambient sound other than the main sound included in the R signal of the sound source 1.

In this manner, the sound source separation unit 10 outputs the five kinds of sound signals listed below to the output signal generation unit 20, on the basis of the L and R signals of the sound source 1.
(1) L signal
(2) R signal
(3) Primary signal
(4) Ambient L signal
(5) Ambient R signal

Next, processes at the output signal generation unit 20 are described.

The output signal generation unit 20 generates a sound signal to be output from each of the plurality of speakers, on the basis of a plurality of kinds of sound signals input from the sound source separation unit 10.

The output signal generation unit 20 includes the five signal processing units listed below as signal processing units for the five kinds of sound signals input from the sound source separation unit 10:
(1) an L signal processing unit 21L;
(2) an R signal processing unit 21R;
(3) a primary signal processing unit (P signal processing unit) 21P;
(4) an ambient L signal processing unit (AL signal processing unit) 21AL; and
(5) an ambient R signal processing unit (AR signal processing unit) 21AR.

The L signal processing unit 21L receives an input of the L signal from the sound source separation unit 10, and generates an output signal of the L signal for a plurality (n) of speakers as the output destinations. The L signal processing unit 21L includes delay units and amplification units associated with the respective speakers as the output destinations.

The L signal input from the sound source separation unit 10 is subjected to a delay process at the delay units associated with the respective speakers, is then subjected to an amplification process at the amplification units, is output to addition units 22-1 to 22-n associated with the respective speakers, is added to outputs from the other signal processing units at the addition units 22-1 to 22-n, and is then output to the n speakers.

In the L signal processing unit 21L, delay/amplification processing units in the same number as the number of speakers are formed in parallel. S1 shown in the L signal processing unit 21L in the drawing performs a delay process and an amplification process on the L signal to be output to the speaker (S1) as the output destination. S2 performs a delay process and an amplification process on the L signal to be output to the speaker (S2) as the output destination. The processing units that follow perform similar processes. That is, Sn also performs a delay process and an amplification process on the L signal to be output to the speaker (Sn) as the output destination.

The R signal processing unit 21R receives an input of the R signal from the sound source separation unit 10, and generates an output signal of the R signal for the plurality (n) of speakers as the output destinations. The R signal processing unit 21R also includes delay units and amplification units associated with the respective speakers as the output destinations.

The R signal input from the sound source separation unit 10 is subjected to a delay process at the delay units associated with the respective speakers, is then subjected to an amplification process at the amplification units, is output to the addition units 22-1 to 22-n associated with the respective speakers, is added to outputs from the other signal processing units at the addition units 22-1 to 22-n, and then output to the n speakers.

The primary signal processing unit (P signal processing unit) 21P receives an input of the primary signal from the sound source separation unit 10, and generates an output signal of the primary signal for the plurality (n) of speakers that are the output destinations. The primary signal processing unit 21P also includes delay units and amplification units associated with the respective speakers that are the output destinations.

The primary signal input from the sound source separation unit 10 is subjected to a delay process at the delay units associated with the respective speakers, is then subjected to an amplification process at the amplification units, is output to the addition units 22-1 to 22-n associated with the respective speakers, is added to outputs from the other signal processing units at the addition units 22-1 to 22-n, and is then output to the n speakers.

The ambient L signal processing unit (AL signal processing unit) 21AL receives an input of the ambient L signal from the sound source separation unit 10, and generates an output signal of the ambient L signal for the plurality (n) of speakers that are the output destinations. The ambient L signal processing unit 21AL also includes delay units and amplification units associated with the respective speakers that are the output destinations.

The ambient L signal input from the sound source separation unit 10 is subjected to a delay process at the delay units associated with the respective speakers, is then subjected to an amplification process at the amplification units, is output to addition units 22-1 to 22-n associated with the respective speakers, is added to outputs from the other signal processing units at the addition units 22-1 to 22-n, and is then output to the n speakers.

The ambient R signal processing unit (AR signal processing unit) 21AR receives an input of the ambient R signal from the sound source separation unit 10, and generates an output signal of the ambient R signal for the plurality (n) of speakers that are the output destinations. The ambient R signal processing unit 21AR also includes delay units and amplification units associated with the respective speakers that are the output destinations.

The ambient R signal input from the sound source separation unit 10 is subjected to a delay process at the delay units associated with the respective speakers, is then subjected to an amplification process at the amplification units, is output to addition units 22-1 to 22-n associated with the respective speakers, is added to outputs from the other signal processing units at the addition units 22-1 to 22-n, and is then output to the n speakers.

The addition unit 22-1 is the addition unit associated with the speaker (S1) serving as its output destination, and generates a sound signal to be output to the speaker (S1), by adding up the signals resulting from the delay processes and the amplification processes performed on the respective signals at the following five signal processing units:
(1) the L signal processing unit 21L;
(2) the R signal processing unit 21R;
(3) the primary signal processing unit (P signal processing unit) 21P;
(4) the ambient L signal processing unit (AL signal processing unit) 21AL; and
(5) the ambient R signal processing unit (AR signal processing unit) 21AR.

The speaker (S1) outputs a sound signal formed with the result of addition of the signals resulting from the specific delay processes and the specific amplification processes performed on the L signal, the R signal, the primary signal, the ambient L signal, and the ambient R signal.

Each of the addition units 22-2 to 22-n is also the addition unit associated with the speaker (S2 to Sn) serving as its output destination, and generates a sound signal to be output to the speaker (S2 to Sn), by adding up the signals resulting from the delay processes and the amplification processes performed on the respective signals at the following five signal processing units:
(1) the L signal processing unit 21L;
(2) the R signal processing unit 21R;
(3) the primary signal processing unit (P signal processing unit) 21P;
(4) the ambient L signal processing unit (AL signal processing unit) 21AL; and
(5) the ambient R signal processing unit (AR signal processing unit) 21AR.

In this manner, the n speaker (S1 to Sn) serving as the output destinations each output a sound signal formed with the result of addition of the signals resulting from the specific delay processes and the specific amplification processes performed on the L signal, the R signal, the primary signal, the ambient L signal, and the ambient R signal.

The delay amounts at the delay units and the amplification amounts at the amplification units that are associated with the respective speakers and are formed in the respective signal processing units of the output signal generation unit 20, which are
(1) the L signal processing unit 21L,
(2) the R signal processing unit 21R,
(3) the primary signal processing unit (P signal processing unit) 21P,
(4) the ambient L signal processing unit (AL signal processing unit) 21AL, and
(5) the ambient R signal processing unit (AR signal processing unit) 21AR,
can be dynamically changed.

As the delay amounts at the delay units and the amplification amounts at the amplification units that are associated with the speakers and are formed in the respective signal processing units are changed, the virtual sound source positions of the respective signals can be changed. That is, the virtual sound source positions of the five kinds of sound signals output by the sound source separation unit 10, which are
(1) the L signal,
(2) the R signal,
(3) the primary signal,
(4) the ambient L signal, and
(5) the ambient R signal, can be changed to various positions.

In other words, the virtual sound source positions corresponding to the respective sound sources of the above signals (1) to (5) can be changed and controlled, and thus, various sound fields can be formed by the control.

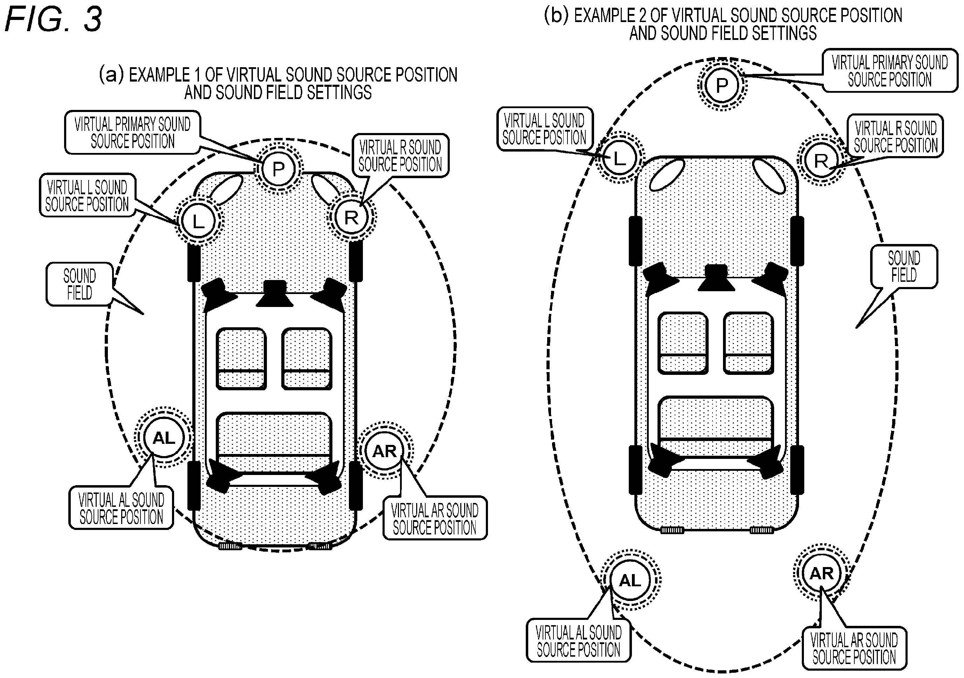

Referring now to Fig. 3, examples of settings of the virtual sound source positions corresponding to the five kinds of sound sources and settings of sound fields are described.

Fig. 3 shows two different examples of settings of virtual sound source positions and sound fields.

In Example 1 (a) of settings of the virtual sound source positions and a sound field, a virtual primary sound source position is set at the center position of the front of the vehicle, a virtual L signal sound source position and a virtual R signal sound source position are set at the left and right sides of the front of the vehicle, and a virtual ambient L signal sound source position and a virtual ambient R signal sound source position are set at the left and right sides of the rear of the vehicle. The sound field is represented by the elliptical shape (an ellipse indicated by a dashed line) connecting these five virtual sound source positions. Note that Fig. 3(a) is a plan view observed from above, and shows a sound field that has a planar and substantially circular shape. However, the actual sound field is a flat and substantially spherical sound field that bulges in the vertical direction.

Meanwhile, in Example 2 (b) of settings of the virtual sound source positions and a sound field, the virtual primary sound source position, the virtual L signal sound source position, and the virtual R signal sound source position are set at positions closer to the front than those in Example 1 of settings, and the virtual ambient L signal sound source position and the virtual ambient R signal sound source position are set at positions closer to the rear than those in Example 1 of settings. The sound field is represented by the elliptical shape (an ellipse indicated by a dashed line) connecting these five virtual sound source positions. Note that, like Fig. 3(a), Fig. 3(b) is a plan view observed from above, and shows a sound field that has a planar and elliptical shape. However, the actual sound field is flat and is substantially in the form of an oval sphere that bulges in the vertical direction.

The two types (a) and (b) of settings of virtual sound source positions and sound fields shown in Fig. 3 can be achieved by adjusting the processing amounts (the delay amounts and the amplification amounts) at the delay units and the amplification units of the respective signal processing units formed in the output signal generation unit 20 shown in Fig. 2. Other than the settings shown in Fig. 3, various settings of virtual sound sources and various settings of sound fields can be adopted.

Note that, in the examples described above with reference to Figs. 2 and 3, the types of sound signals for which virtual sound source positions are to be set are the following five kinds of sound signal:
(1) L signal,
(2) R signal,
(3) primary signal,
(4) ambient L signal, and
(5) ambient R signal.

These are the five kinds of signals to be output from the sound separation unit 10 to the output signal generation unit 20 shown in Fig. 2.

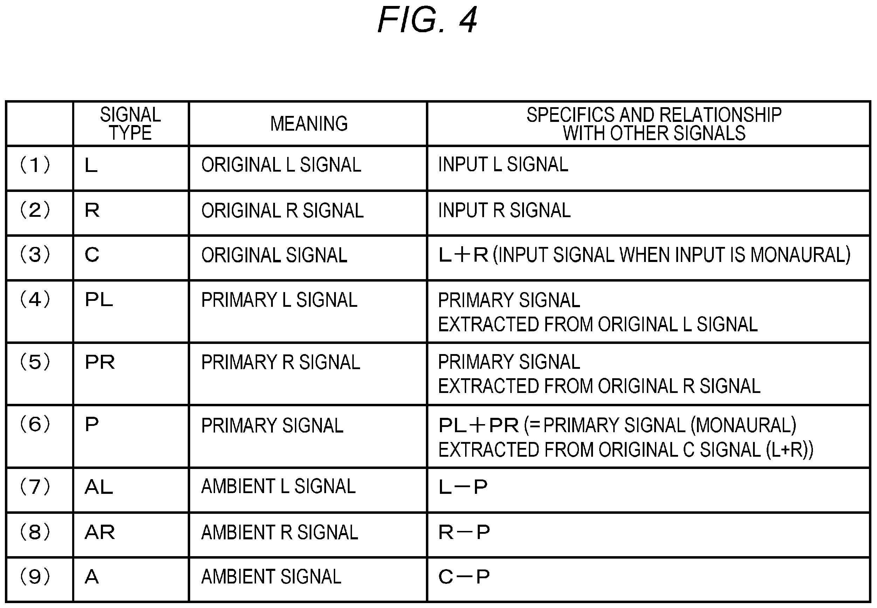

The types of sound signals (separated sound signals) to be output from the sound separation unit 10 to the output signal generation unit 20 shown in Fig. 2 are not limited to these five kinds. For example, the sound separation unit 10 can generate a large number of different signals as shown in Fig. 4, and output these signals to the output signal generation unit 20.

Fig. 4 shows each of the following sound signals:
(1) original L signal (L),
(2) original R signal (R),
(3) original signal (C),
(4) primary L signal (PL),
(5) primary R signal (PR),
(6) primary signal (P),
(7) ambient L signal (AL),
(8) ambient R signal (AR), and
(9) ambient signal (A).

The original L signal (L) and the original R signal (R) are L and R signals of the input sound source, respectively. The original signal (C) is an addition signal (L + R) of the L and R signals of the input sound source. In a case where the input sound source is a monaural signal, the original signal (C) is its input signal.

The primary L signal (PL) is a primary sound signal whose primary component is the main sound signal extracted from the original L signal.

The primary R signal (PR) is a primary sound signal whose primary component is the main sound signal extracted from the original R signal.

The primary signal (P) is a primary sound signal whose primary component is the main sound signal extracted from the original C signal (L+R, or the input monaural signal).

The ambient L signal (AL) is an ambient sound signal whose primary component is a sound signal other than the main sound signal extracted from the original L signal.

The ambient R signal (AR) is an ambient sound signal whose primary component is a sound signal other than the main sound signal extracted from the original R signal.

The ambient signal (A) is an ambient sound signal whose primary component is a sound signal other than the main sound signal extracted from the original C signal (L+R, or the input monaural signal).

Note that the time-frequency transform unit (STFT) 11 in the sound source separation unit 10 of the sound signal processing device configuration described with reference to Fig. 2 is designed to process the L signal and the R signal of the input sound source 1 separately from each other, and the frequency-time inverse transform unit (ISTFT) 13 is also designed to process the L signal and the R signal separately from each other, so that the primary L signal (PL) and the primary R signal (PR) can be generated. The other signals shown in Fig. 4 can also be generated by addition processes and subtraction processes with other signals.

As the configuration shown in Fig. 2 is used in this manner, virtual sound source positions of the sound signals of the respective kinds shown in Fig. 4 can be set at various positions, and various sound fields depending on the sound field positions can be formed.

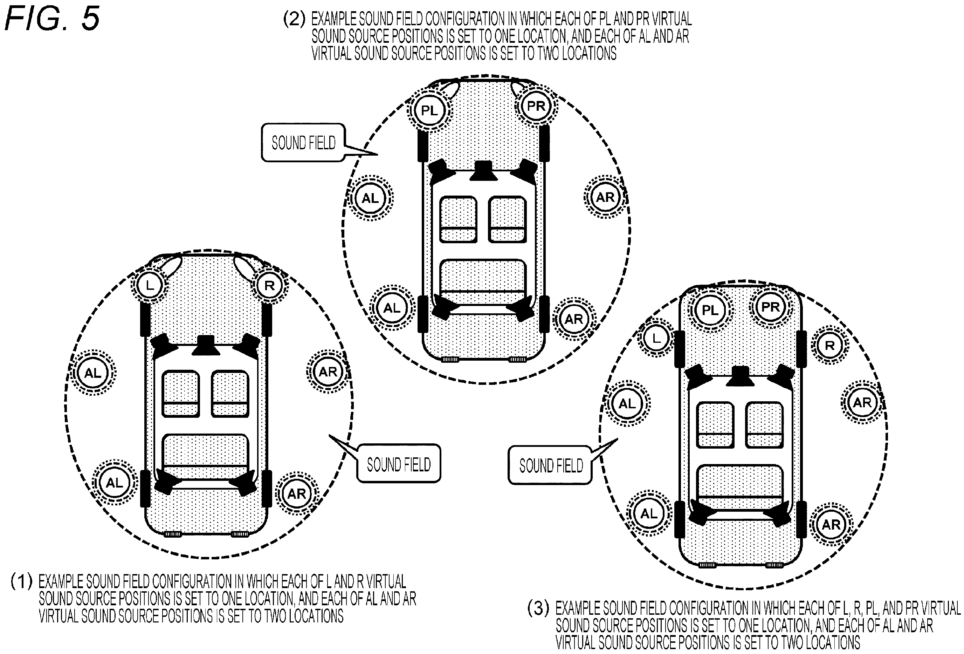

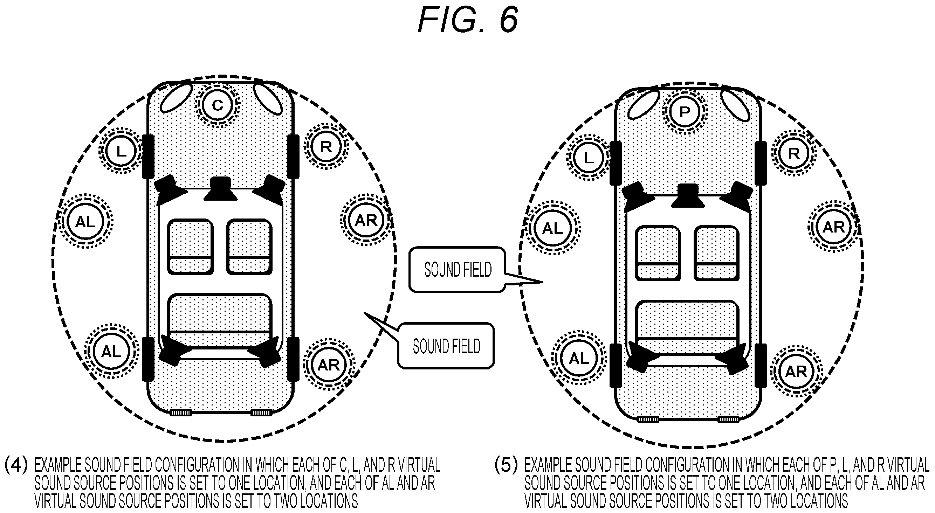

Examples of settings of virtual sound source positions and settings of sound fields using some of the nine types of sound signals shown in Fig. 4 are now described, with reference to Figs. 5 and 6.

Figs. 5 and 6 show the following five different examples of settings of virtual sound source positions and sound fields.
(1) An example sound field configuration in which each of the L and R virtual sound source positions is set at one location, and each of the AL and AR virtual sound source positions is set at two locations
(2) An example sound field configuration in which each of the PL and PR virtual sound source positions is set at one location, and each of the AL and AR virtual sound source positions is set at two locations
(3) An example sound field configuration in which each of the L, R, PL, and PR virtual sound source positions is set at one location, and each of the AL and AR virtual sound source positions is set at two locations
(4) An example sound field configuration in which each of the C, L, and R virtual sound source positions is set at one location, and each of the AL and AR virtual sound source positions is set at two locations
(5) An example sound field configuration in which each of the P, L, and R virtual sound source positions is set at one location, and each of the AL and AR virtual sound source positions is set at two locations

A sound field is an ellipse indicated by a dashed line in each drawing, and has an elliptical shape connecting a plurality of virtual sound source positions. Note that, as described above with reference to Fig. 3, Figs. 5 and 6 are plan views observed from above, and show a sound field as a planar ellipse. However, a sound field in practice is flat and is in the form of an oval sphere that bulges in the vertical direction.

Note that, in the settings (1) to (5) shown in Figs. 5 and 6, each of the AL and AR virtual sound source positions is set at two different positions. In this manner, virtual sound sources can be set at a plurality of different locations for one separated sound signal generated at the sound source separation unit 10.

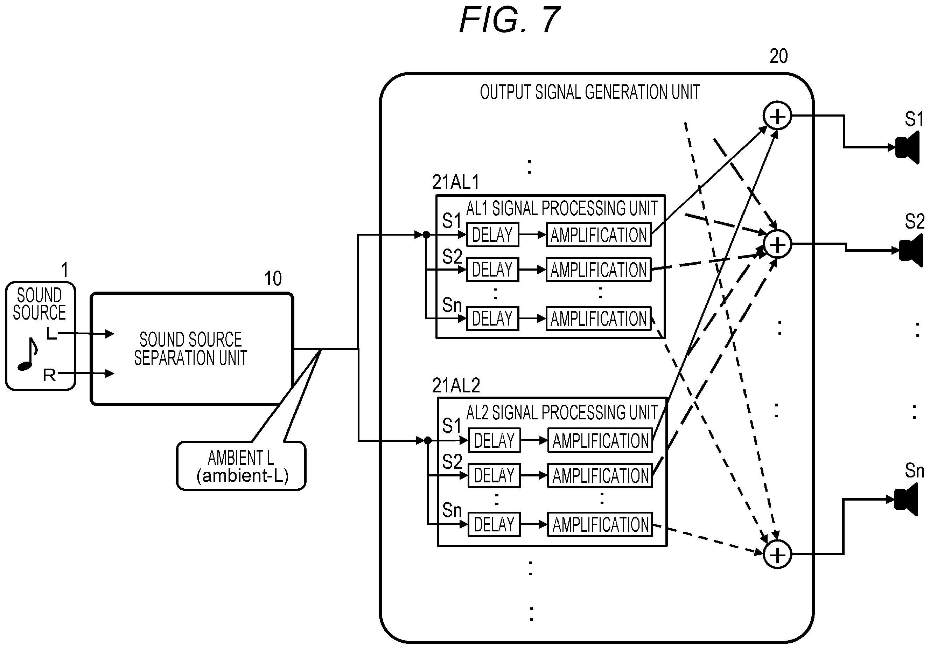

An example configuration for setting virtual sound sources at a plurality of different locations for one separated sound signal in the above manner is now described with reference to Fig. 7. Fig. 7 shows the configuration of a sound signal processing device including the sound source separation unit 10 and the output signal generation unit 20 described above with reference to Fig. 2. The configuration shown in Fig. 7 is an example configuration for setting virtual sound sources of an ambient L signal at two different positions. Therefore, the ambient L signal output from the sound source separation unit 10 is input, in parallel, to the two signal processing units of an ambient L1 signal (AL1) processing unit 21AL1 and an ambient L2 signal (AL2) processing unit 21AL2 that are formed in the output signal generation unit 20.

The ambient L1 signal (AL1) processing unit 21AL1 and the ambient L2 signal (AL2) processing unit 21AL2 each include delay units and amplification units associated with the respective speakers (S1 to Sn).

The ambient L1 signal (AL1) processing unit 21AL1 and the ambient L2 signal (AL2) processing unit 21AL2 generate output signals to be output to the respective speakers, while the processing amounts at the delay units and the amplification units associated with the respective speakers (S1 to Sn), which are the delay amounts and the amplification amounts, are varied. As such a process is performed, virtual sound sources can be set at a plurality of different locations for one separated sound signal generated at the sound source separation unit 10.

As the signal processing configuration shown in Fig. 2 or 7 is used as described above, one or more virtual sound source positions corresponding to each of the different kinds of sound signals separated from the input sound source can be set at various positions. Since a sound field is defined by the virtual sound source positions of the respective separated sound signals and the outputs thereof, it is possible to perform control to set sound fields in various regions and with various shapes, by adjusting the virtual sound source positions of the respective separated audio signals and the outputs thereof.

In the configurations shown in Figs. 2 and 7, the processing amounts at the delay units and the amplification units of the respective signal processing units 21 in the output signal generation unit 20, which are the delay amounts at the delay units and the amplification amounts at the amplification units, can be dynamically changed.

The present disclosure uses these characteristics to provide a configuration in which the delay amounts at the delay units and the amplification amounts at the amplification units of each signal processing unit 21 in the output signal generation unit 20 are controlled in accordance with changes in the velocity and the traveling direction of the vehicle, and the virtual sound source positions of the respective separated sound signals and the sound field are dynamically changed. In the chapters below, specific examples of configurations and processes according to the present disclosure are described.

### [2. Example Configurations of a Mobile Apparatus and a Sound Signal Processing Device of the Present Disclosure, and Example Processes Therein]

A mobile apparatus and a sound signal processing device of the present disclosure perform the sound field control process including the sound separation process in the sound separation unit 10 and the output signal generation process for each speaker in the output signal generation unit 20 as described above with reference to Figs. 2 and 7. In other words, the mobile apparatus and the sound signal processing device use monopole synthesis to perform control to dynamically change virtual sound source positions of the respective sound sources (L, R, P, AL, AR, and the like) and the sound field in accordance with the behavior of the vehicle. With this control, it becomes possible to perform such sound field control that the point of view and the field of view of the driver (user) driving the vehicle can be followed, for example.

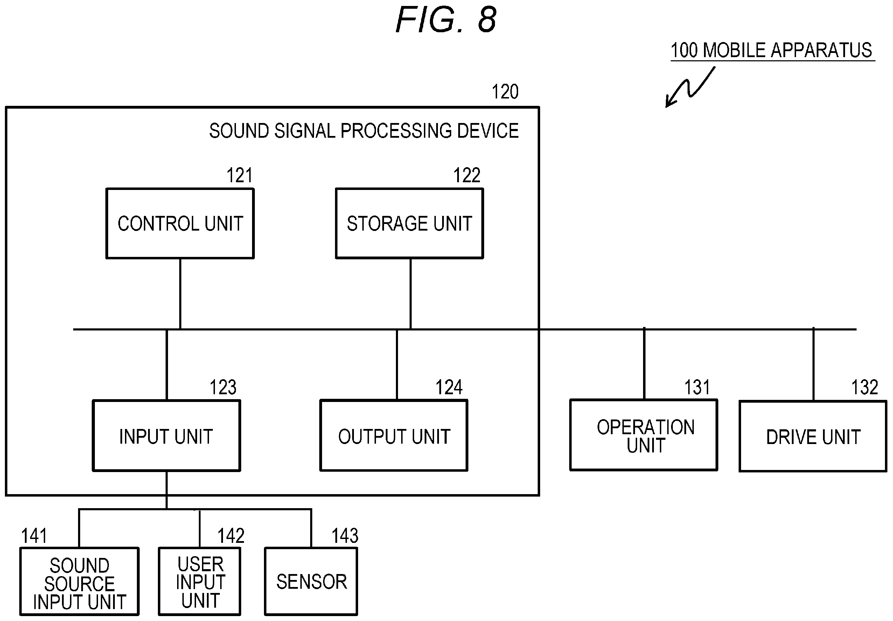

Fig. 8 is a diagram showing an example configuration of a mobile apparatus 100 according to the present disclosure. A sound signal processing device 120 is mounted in the mobile apparatus 100.

The mobile apparatus 100 includes the sound signal processing device 120, an operation unit 131, a drive unit 132, a sound source input unit 141, a user input unit 142, and a sensor 143. The sound signal processing device 120 includes a control unit 121, a storage unit 122, an input unit 123, and an output unit 124. Note that these respective components are connected by an in-vehicle communication network or a bus compliant with an appropriate standard, such as a controller area network (CAN), a local interconnect network (LIN), a local area network (LAN), or FlexRay (registered trademark), for example.

The operation unit 131 is an operation unit such as the accelerator, the brake, and the steering (wheel) of the mobile apparatus (the vehicle) 100, for example. The drive unit 132 includes components to be used for driving the vehicle, such as the engine and the tires.

The control unit 121 of the sound signal processing device 120 performs the sound source separation process and the sound signal generation process described above with reference to Fig. 2. That is, sound source control and sound field control using monopole synthesis are performed. Note that the control unit 121 performs the signal processing described above with reference to Fig. 2, using either hardware or software, or both.

In a case where processing using software is performed, a program stored in the storage unit 122 is executed by a program execution unit such as a CPU in the control unit 121 to perform signal processing.

The storage unit 122 is a storage unit that stores a program to be executed by the control unit 121, and the parameters and the like to be used in the signal processing. The storage unit 122 is also used as the storage area for reproduction sound data and the like.

As shown in the drawing, the input unit 123 is an input unit that enables inputting of various kinds of data from the sound source input unit 141, the user input unit 142, the sensor 143, and the like. The sound source input unit 141 includes a media reproduction unit for CDs, flash memories, or the like, and an input unit or the like for Internet delivery data, for example. The user input unit 142 is a switch that can be operated by the user, such as an input unit that inputs a music reproduction start/stop instruction, for example. The sensor 143 is a sensor such as a distance sensor, for example, and detects an object approaching the mobile apparatus 100. The output unit 124 includes a display unit or the like for image output, as well as a speaker that outputs sound.

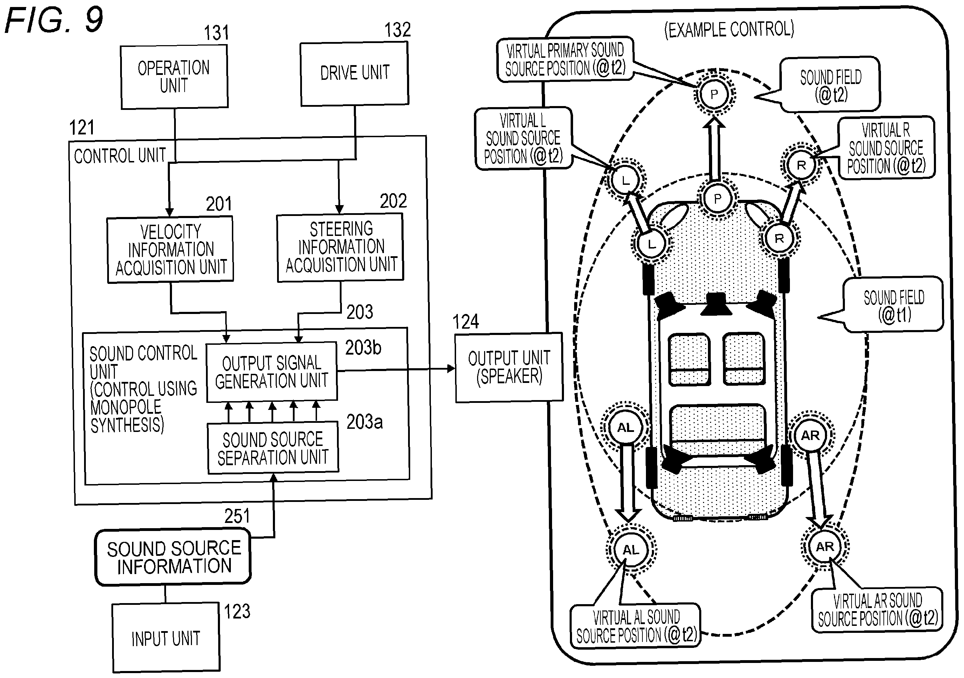

Next, specific examples of the configuration of the control unit 121 of the sound signal processing device 120 and processes to be performed by the control unit 121 are described, with reference to Figs. 9 and the drawings that follow. As described above, the control unit 121 performs the sound source separation process and the sound signal generation process described above with reference to Fig. 2. That is, sound source control and sound field control using monopole synthesis are performed.

As shown in Fig. 9, the control unit 121 includes a velocity information acquisition unit 201, a steering information acquisition unit 202, and a sound control unit 203. The sound control unit 203 includes a sound source separation unit 203a and an output signal generation unit 203b.

The velocity information acquisition unit 201 acquires information about the velocity of the mobile apparatus 100, which is the vehicle, from the operation unit 131 and the drive unit 132.

The steering information acquisition unit 202 acquires information about the steering (wheel) setting information about the mobile apparatus 100, which is the vehicle, from the operation unit 131 and the drive unit 132.

Note that these pieces of information can be acquired via an in-vehicle communication network such as a controller area network (CAN) as described above, for example.

The sound control unit 203 not only receives an input of sound source information 251 via the input unit 123, but also receives an input of velocity information about the mobile apparatus 100 from the velocity information acquisition unit 201, and an input of steering (wheel) setting information about the mobile apparatus 100 from the steering information acquisition unit 202.

The sound source information 251 is a stereo sound source of two channels of L and R, like the sound source 1 described above with reference to Fig. 2, for example. For example, the sound source information 251 is media reproduction sound data such as a CD or a flash memory, Internet delivery sound data, or the like.

The sound control unit 203 performs a process of controlling virtual sound source positions and a sound field, in accordance with the velocity information about the mobile apparatus 100 input from the velocity information acquisition unit 201, the steering (wheel) setting information about the mobile apparatus 100 input from the steering information acquisition unit 202, or at least one of these pieces of information. That is, the sound control unit 203 generates output sound signals to be output to the plurality of speakers forming the output unit 124, and outputs the output sound signals.

Specifically, the sound source separation process and the sound signal generation process described above with reference to Fig. 2 are performed. In other words, sound source control and sound field control using monopole synthesis are performed.

The process of generating the output sound signals to be output to the speakers forming the output unit 124 is performed as a process similar to the sound source separation process by the sound source separation unit 10 and the sound signal generation process by the sound signal generation unit 20 described above with reference to Fig. 2. The sound source separation unit 203a of the sound control unit 203 receives an input of the sound source information 251 via the input unit 123, and separates the input sound source into a plurality of sound signals of different kinds. Specifically, the input sound source is separated into the five sound signals listed below, for example.
(1) L signal
(2) R signal
(3) Primary signal
(4) Ambient L signal
(5) Ambient R signal

The output signal generation unit 203b of the sound control unit 203 then performs an output signal generation process for outputting each of the above five separated sound signals to each of the speakers. This output signal generation process is performed as specific delay processes and specific amplification processes for the respective separated sound signals to be input to the respective speakers, as described above with reference to Fig. 2. In other words, control using monopole synthesis is performed.

By this process, control is performed to set virtual sound source positions of the respective separated sound signals at various positions, and further setting a sound field that can be in various regions and have various shapes.

The sound control unit 203 performs a process of controlling the virtual sound source positions and the sound field, in accordance with the velocity information about the mobile apparatus 100 input from the velocity information acquisition unit 201, for example.

The sound control unit 203 also performs a process of controlling the virtual sound source positions and the sound field, in accordance with the steering (wheel) setting information about the mobile apparatus 100 input from the steering information acquisition unit 202.

Specifically, the output signal generation unit 203b of the sound control unit 203 performs control to change the delay amounts at the delay units and the amplification amounts at the amplification units associated with the respective speakers and formed in the signal processing units associated with the respective separated sound signals in the output signal generation unit described above with reference to Fig. 2, in accordance with the velocity information about the mobile apparatus 100 input from the velocity information acquisition unit 201, and the steering (wheel) setting information about the mobile apparatus 100 input from the steering information acquisition unit 202.

By this control, the virtual sound source positions and the sound field are changed in accordance with changes in the velocity and the traveling direction of the mobile apparatus 100. With these control processes, it becomes possible to perform such sound field control that the shape of the sound field changes with changes in the point of view or the field of view of the driver (user) driving the vehicle, for example.

The right side of Fig. 9 shows an example of control on changes in the virtual sound source positions and the sound field in accordance with the velocity information about the mobile apparatus 100 input from the velocity information acquisition unit 201.

For example, the almost circular dashed line at the center indicates the sound field when the vehicle is not moving (@t1). L, R, P, AL, and AR in this circular dashed line represent the virtual sound source positions of the respective sound signals, which are the L signal, the R signal, the primary signal, the ambient L signal, and the ambient R signal, when the vehicle is moving at low velocity (@t1).

Further, the ellipse indicated by the vertically long dashed line outside the almost circular dashed line at the center indicates the sound field when the vehicle is moving (@t2). L, R, P, AL, and AR in this vertically long elliptical dashed line represent the virtual sound source positions of the respective sound signals, which are the L signal, the R signal, the primary signal, the ambient L signal, and the ambient R signal, when the vehicle is moving (@t2).

In this manner, the sound control unit 203 performs control to change the virtual sound source positions of the respective separated sound signals and the sound field, in accordance with the moving velocity of the vehicle and the steering (wheel) setting information about the vehicle.

### [3. Specific Examples of Virtual Sound Source Positions and Sound Field Control Depending on the Moving Velocity of the Vehicle]

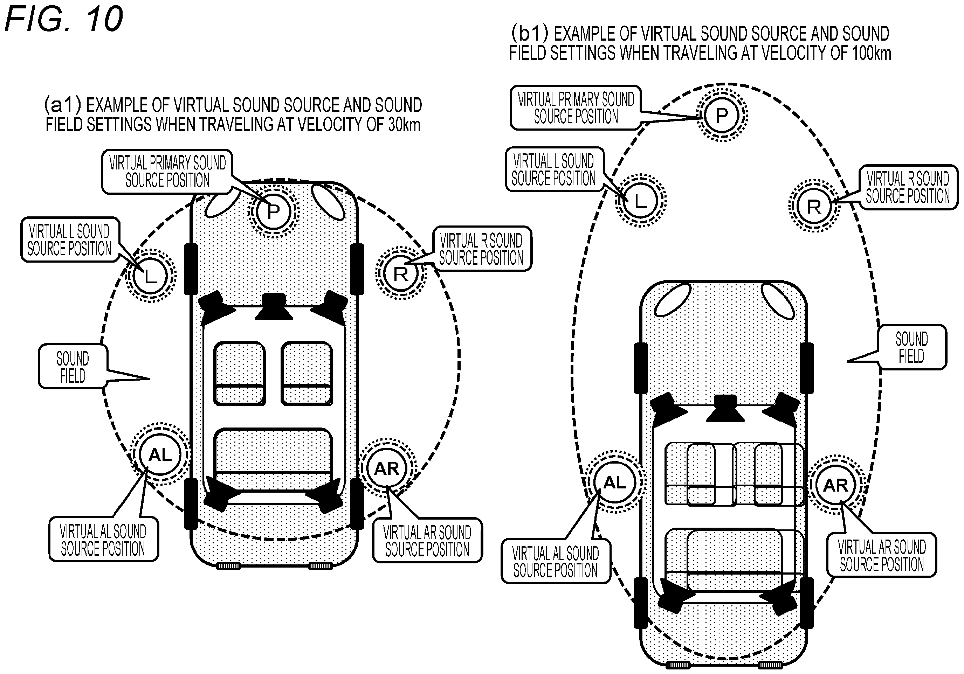

Next, specific examples of virtual sound source positions and sound field control depending on the moving velocity of the vehicle are described, with reference to Fig. 10 and the drawing that follow.

Fig. 10 shows the following two examples of the settings of the virtual sound sources and the sound field:
(a1) an example of the settings of the virtual sound sources and the sound field at a time when the vehicle is traveling at 30 km/h; and
(b1) an example of the settings of the virtual sound sources and the sound field at a time when the vehicle is traveling at 100 km/h.

In the example (a1) of the settings of the virtual sound sources and the sound field at a time when the vehicle is traveling at 30 km/h, an almost circular sound field with a diameter substantially equal to the length of the vehicle is set, and the virtual primary sound source position (P) is set at a vehicle front position on the circumference. Also, the virtual L sound source position (L) and the virtual R sound source position (R) are set at both side positions slightly on the rear side of the virtual primary sound source position (P). Further, the virtual ambient L sound source position (AL) and the virtual ambient R sound source position (AR) are set at both side positions at the rear of the vehicle.

Note that Fig. 10(a1) is a plan view observed from above, and shows a sound field that has a planar and substantially circular shape. However, the actual sound field is a flat and substantially spherical sound field that bulges in the vertical direction.

In the example (b1) of the settings of the virtual sound sources and the sound field at a time when the vehicle is traveling at 100 km/h, on the other hand, an elliptical sound field having its center slightly closer to the front of the vehicle is set. This elliptical sound field has an elliptical shape whose long axis is slightly longer than the length of the vehicle, and whose short axis is substantially equal to the vehicle width. The elliptical shape is longer in the longitudinal direction of the vehicle. In this case, the virtual primary sound source position (P) is set at a vehicle front position on the circumference of this ellipse. Also, the virtual L sound source position (L) and the virtual R sound source position (R) are set at both side positions slightly on the rear side of the virtual primary sound source position (P). Further, the virtual ambient L sound source position (AL) and the virtual ambient R sound source position (AR) are set at both side positions near the center of the vehicle.

Note that, like Fig. 10(a1), Fig. 10(b1) is also a plan view observed from above, and shows a sound field that is a planar ellipse. However, the actual sound field is flat and is substantially in the form of an oval sphere that bulges in the vertical direction.

When the example (a1) of the settings of the virtual sound sources and the sound field at a time when the vehicle is traveling at 30 km/h is compared with the example (b1) of the settings of the virtual sound sources and the sound field at a time when the vehicle is traveling at 100 km/h, the sound field at a time when the vehicle is traveling at 100 km/h is longer in the forward direction than the sound field at a time when the vehicle is traveling at 30 km/h. That is, as the velocity becomes higher, the length in the long axis direction (the longitudinal direction) becomes greater. Also, as the velocity becomes higher, the length in the short axis direction (the width direction) becomes smaller.

The sound field settings depending on the velocity shown in Fig. 10 are settings that change with the field of view of the driver (user) driving the vehicle.

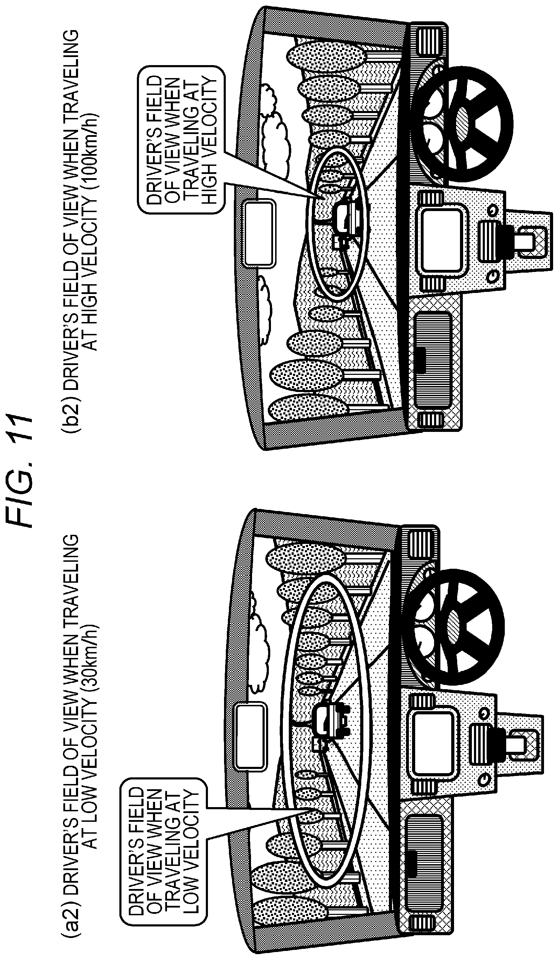

Fig. 11 is a diagram showing examples of the field of view of the driver (user) driving the vehicle. Fig. 11 shows the following two examples of the field of view of the driver:
(a2) the field of view of the driver at a time when the vehicle is traveling at low velocity (30km/h); and
(b2) the field of view of the driver at a time when the vehicle is traveling at high velocity (100km/h).

The field of view (a2) of the driver at a time when the vehicle is traveling at low velocity (30 km/h) is a wide field of view in front of the driver. That is, as the vehicle is traveling slowly, the driver can drive while observing the conditions of the surroundings.

On the other hand, the field of view (b2) of the driver at a time when the vehicle is traveling at high velocity (100 km/h) is a narrow field in front of the driver. That is, since the vehicle is traveling at high velocity, the driver pays attention only to a narrow region in the traveling direction of the vehicle while driving.

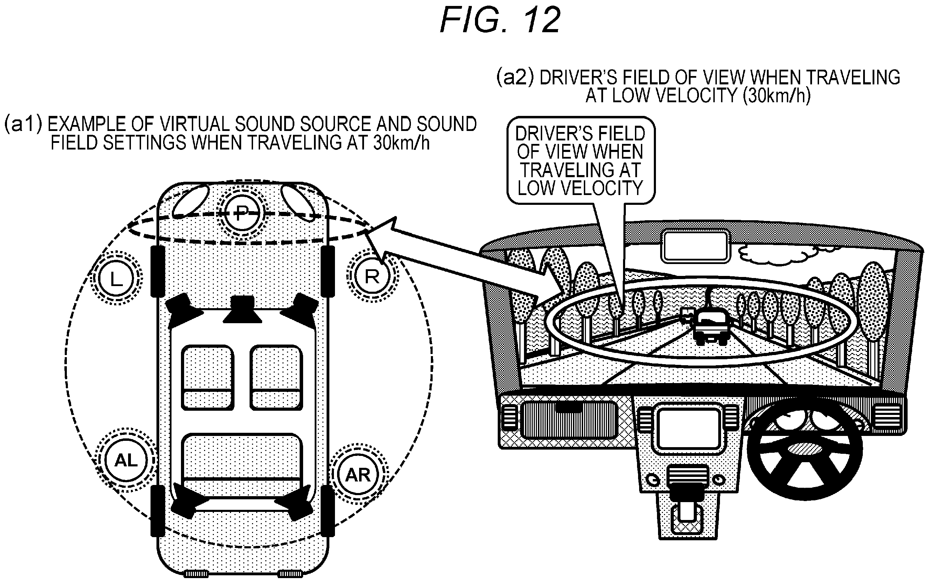

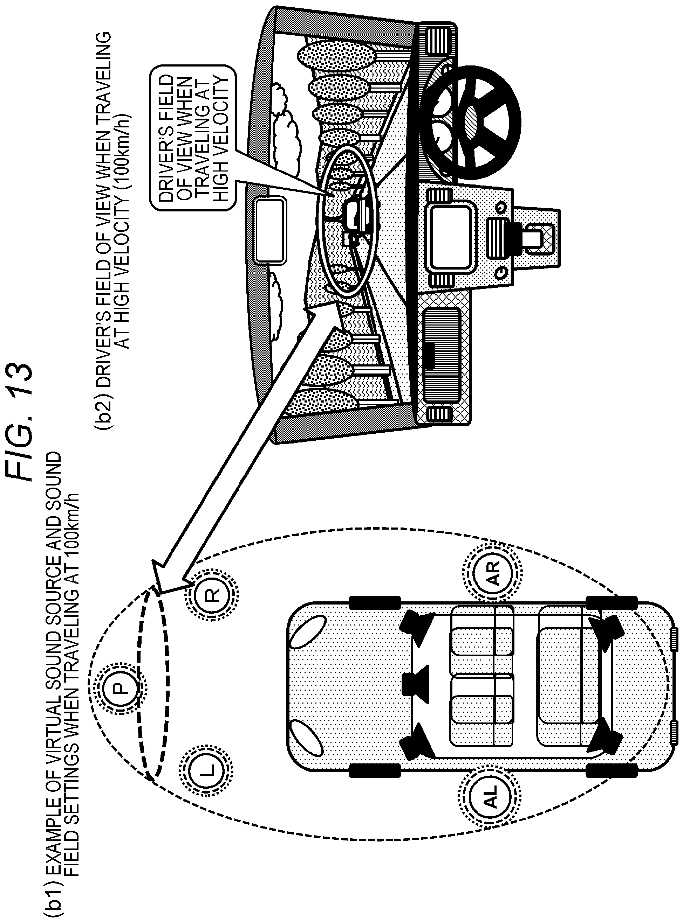

The correspondence relationship between the examples of the sound field settings depending on the velocity described above with reference to Fig. 10 and the driver's field of view depending on the velocity described above with reference to Fig. 11 is now described, with reference to Figs. 12 and 13.

Fig. 12 is a diagram showing, side by side, the example (a1) of the settings of the virtual sound sources and the sound field at a time when the vehicle is traveling at 30 km/h described above with reference to Fig. 10, and the field of view (a2) of the driver at a time when the vehicle is traveling at low velocity (30 km/h) described above with reference to Fig. 11.

The cross-sectional shape of the front portion of the substantially circular sound field shown in the example (a1) of the settings of the virtual sound sources and the sound field at a time when the vehicle is traveling at 30 km/h, which is an elliptical shape having its long axis in the horizontal direction, substantially coincides with the field of view (a2) of the driver at a time when the vehicle is traveling at low velocity (30 km/h) .

That is, the driver feels (hears) a reproduced sound having a sound field with an expansion that substantially coincides with his/her field of view.

On the other hand, Fig. 13 is a diagram showing, side by side, the example (b1) of the settings of the virtual sound sources and the sound field at a time when the vehicle is traveling at 100 km/h described above with reference to Fig. 10, and the field of view (b2) of the driver at a time when the vehicle is traveling at high velocity (100 km/h) described above with reference to Fig. 11.

The cross-sectional shape of the front portion of the elliptical sound field shown in the example (b1) of the settings of the virtual sound sources and the sound field at a time when the vehicle is traveling at 100 km/h, which is a small elliptical shape having its long axis in the horizontal direction, substantially coincides with the field of view (b2) of the driver at a time when the vehicle is traveling at high velocity (100 km/h).

That is, the driver feels (hears) a reproduced sound having a sound field with an expansion that substantially coincides with his/her field of view.

As described above, when controlling the sound field in conjunction with the moving velocity of the vehicle, the sound signal processing device of the present disclosure performs control to form a sound field having an expansion that substantially coincides with the field of view of the driver. By conducting such sound field control, the driver can hear a reproduced sound having a sound field that substantially coincides with the field of view depending on the moving velocity of the vehicle. Thus, the driver can hear a reproduced sound without any sense of discomfort.

### [4. Specific Examples of Virtual Sound Source Positions and Sound Field Control Depending on Steering (Wheel) Setting Information about the Vehicle]

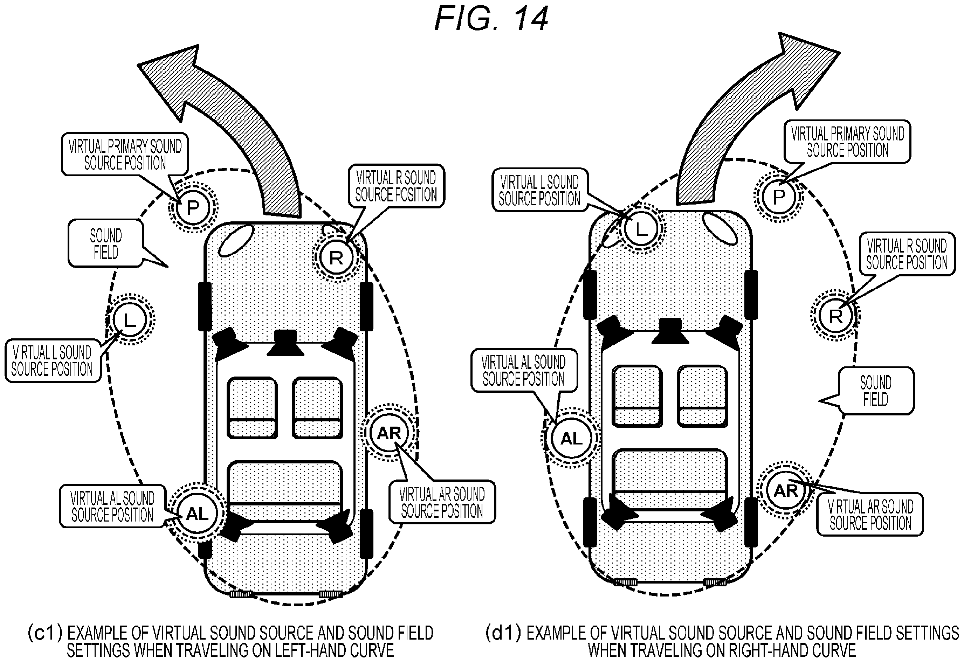

Next, specific examples of virtual sound source positions and sound field control depending on the steering (wheel) setting information about the vehicle are described, with reference to Fig. 14 and the drawings that follow.

Fig. 14 shows the following two examples of settings of the virtual sound sources and the sound field:
(c1) an example of the settings of the virtual sound sources and the sound field at a time when the vehicle is traveling on a left-hand curve; and
(d1) an example of the settings of the virtual sound sources and the sound field at a time when the vehicle is traveling on a right-hand curve.

In the example (c1) of the settings of the virtual sound sources and the sound field at a time when the vehicle is traveling on a left-hand curve, an elliptical sound field having a long axis extending from the front left to the rear right of the vehicle, which corresponds to the traveling direction of the vehicle, is set, and the virtual primary sound source position (P) is set at an upper left position on the ellipse in front of the vehicle. Also, the virtual L sound source position (L) and the virtual R sound source position (R) are set at both side positions slightly on the rear side of the virtual primary sound source position (P). Further, the virtual ambient L sound source position (AL) and the virtual ambient R sound source position (AR) are set at both side positions at the rear of the vehicle.

Note that Fig. 14(c1) is a plan view observed from above, and shows a sound field as a planar ellipse. However, the actual sound field is a sound field in the form of a flat oval sphere that bulges in the vertical direction.

In the example (d1) of the settings of the virtual sound sources and the sound field at a time when the vehicle is traveling on a right-hand curve, on the other hand, an elliptical sound field having a long axis extending from the front right to the rear left of the vehicle, which corresponds to the traveling direction of the vehicle, is set, and the virtual primary sound source position (P) is set at an upper right position on the ellipse in front of the vehicle. Also, the virtual L sound source position (L) and the virtual R sound source position (R) are set at both side positions slightly on the rear side of the virtual primary sound source position (P). Further, the virtual ambient L sound source position (AL) and the virtual ambient R sound source position (AR) are set at both side positions near the center of the vehicle.

Note that, like Fig. 14(c1), Fig. 14(d1) is also a plan view observed from above, and shows a sound field that is a planar ellipse. However, the actual sound field is flat and is substantially in the form of an oval sphere that bulges in the vertical direction.

Both the sound field (c1) at a time when the vehicle is traveling on a left-hand curve and the sound field (d1) at a time when the vehicle is traveling on a right-hand curve are elliptical sound fields having a long axis set in the traveling direction.

The sound field settings depending on the steering (wheel) setting information about the vehicle shown in Fig. 14 are settings that change with the field of view of the driver (user) driving the vehicle.

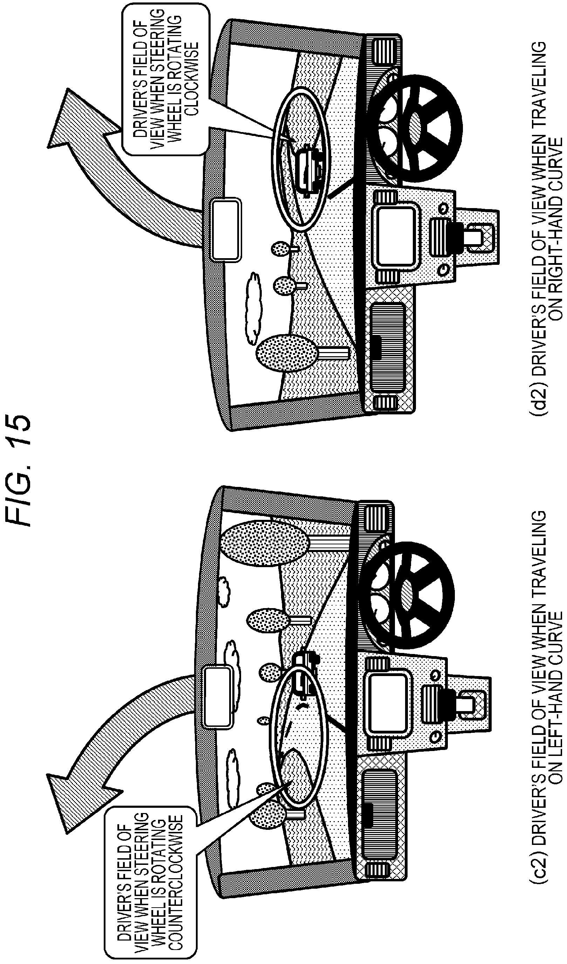

Fig. 15 is a diagram showing examples of the field of view of the driver (user) driving the vehicle. Fig. 15 shows the following two examples of the field of view of the driver:
(c2) the field of view of the driver at a time when the vehicle is traveling on a left-hand curve; and
(d2) the field of view of the driver at a time when the vehicle is traveling on a right-hand curve.

The field of view (c2) of the driver at a time when the vehicle is traveling on a left-hand curve is set in a direction toward the front left, which is the traveling direction of the vehicle. That is, the vehicle is traveling on a left-hand curve, and the driver is driving the vehicle while paying attention to the leftward direction, which is the traveling direction.

On the other hand, the field of view (d2) of the driver at a time when the vehicle is traveling on a right-hand curve is set in a direction toward the front right, which is the traveling direction of the vehicle. That is, the vehicle is traveling on a right-hand curve, and the driver is driving the vehicle while paying attention to the rightward direction, which is the traveling direction.

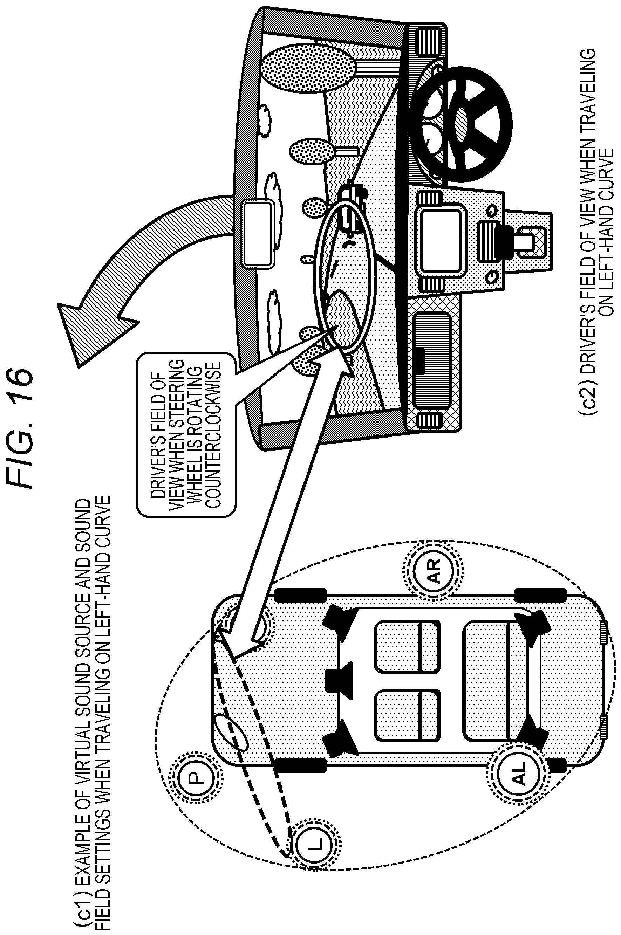

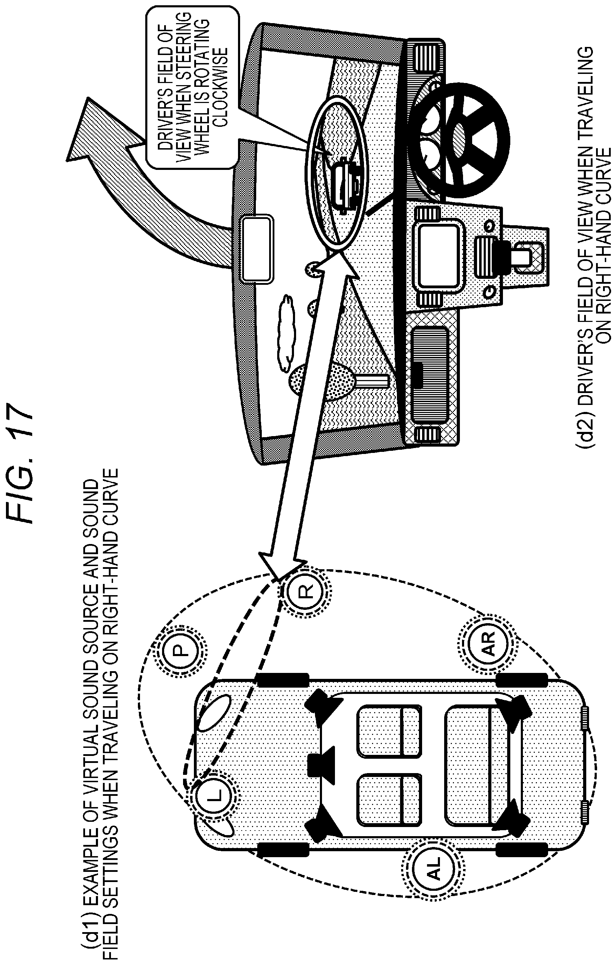

The correspondence relationship between the examples of the sound field settings depending on the steering (wheel) setting information described above with reference to Fig. 14 and the driver's field of view depending on the steering (wheel) setting information described above with reference to Fig. 15 is now described, with reference to Figs. 16 and 17.

Fig. 16 is a diagram showing, side by side, the example (c1) of the settings of the virtual sound sources and the sound field at a time when the vehicle is traveling on a left-hand curve as described above with reference to Fig. 14, and the field of view (c2) of the driver at a time when the vehicle is traveling on a left-hand curve as described above with reference to Fig. 15.

The cross-sectional shape of the front left portion of the elliptical sound field having a long axis extending from the front left to the rear right of the vehicle shown in the example (c1) of the settings of the virtual sound sources and the sound field at a time when the vehicle is traveling on a left-hand curve substantially coincides with the field of view (c2) of the driver at a time when the vehicle is traveling on a left-hand curve.

That is, the driver feels (hears) a reproduced sound having a sound field with an expansion that substantially coincides with his/her field of view.

On the other hand, Fig. 17 is a diagram showing, side by side, the example (d1) of the settings of the virtual sound sources and the sound field at a time when the vehicle is traveling on a right-hand curve as described above with reference to Fig. 14, and the field of view (d2) of the driver at a time when the vehicle is traveling on a right-hand curve as described above with reference to Fig. 15.

The cross-sectional shape of the front right portion of the elliptical sound field having a long axis extending from the front right to the rear left of the vehicle shown in the example (d1) of the settings of the virtual sound sources and the sound field at a time when the vehicle is traveling on a right-hand curve substantially coincides with the field of view (d2) of the driver at a time when the vehicle is traveling on a right-hand curve.

That is, the driver feels (hears) a reproduced sound having a sound field with an expansion that substantially coincides with his/her field of view.

As described above, when controlling the sound field in conjunction with the steering (wheel) setting information about the vehicle, the sound signal processing device of the present disclosure performs control to form a sound field having an expansion that substantially coincides with the field of view of the driver. By conducting such sound field control, the driver can hear a reproduced sound having a sound field that substantially coincides with the field of view depending on the steering (wheel) setting information about the vehicle. Thus, the driver can hear a reproduced sound without any sense of discomfort.

### [5. Specific Examples of Virtual Sound Source Positions and Sound Field Control for Issuing a Warning]

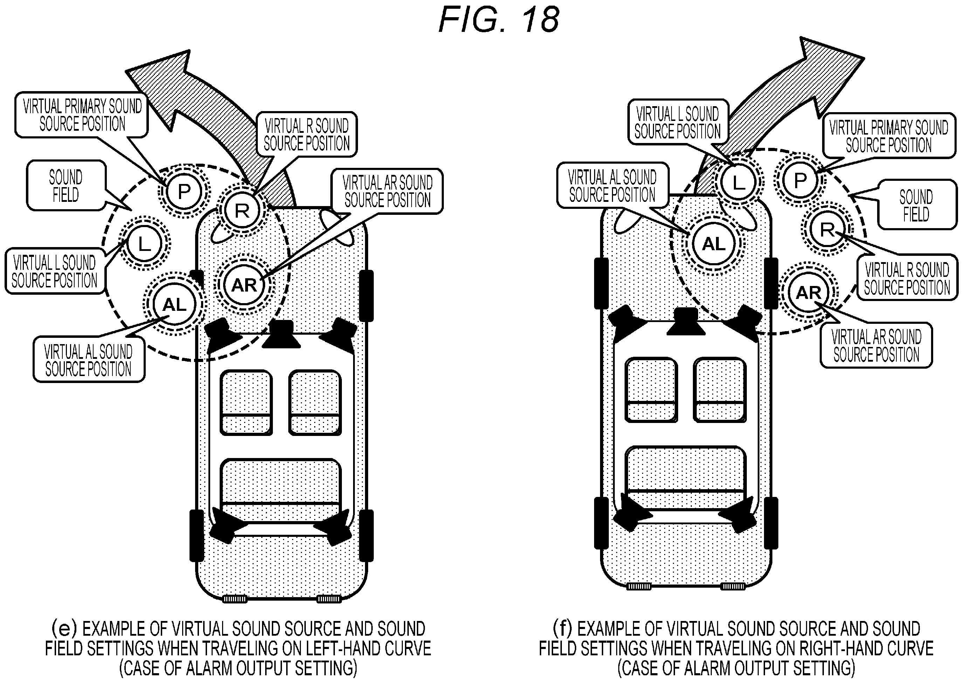

Next, specific examples of virtual sound source positions and sound field control for issuing a warning (an alarm) are described, with reference to Fig. 18 and the drawings that follow.

This example is an example of control on the virtual sound source positions and the sound field for issuing a warning (an alarm) to the driver driving the vehicle. Specifically, in a case where the vehicle is traveling on a curve, for example, the virtual sound source positions and the sound field are set in the direction of the curve. Also, in a case where an object such as another vehicle is approaching the vehicle, processing such as setting the virtual sound source positions and the sound field at the approaching position is performed.

By conducting these control processes, the driver of the vehicle can determine, from sound, in which direction he/she should pay attention.

Fig. 18 shows the following two examples of settings of the virtual sound sources and the sound field:
(e) an example of the settings of the virtual sound sources and the sound field at a time when the vehicle is traveling on a left-hand curve (the case of setting an alarm output); and
(f) an example of the settings of the virtual sound sources and the sound field at a time when the vehicle is traveling on a right-hand curve (the case of setting an alarm output).

In the example (e) of the settings of the virtual sound sources and the sound field at a time when the vehicle is traveling on a left-hand curve (the case of setting an alarm output), the respective separated sound signals (L, R, P, AL, and AR) and the sound field are set only at the left front of the vehicle, which corresponds to the traveling direction of the vehicle.

In the example (f) of the settings of the virtual sound sources and the sound field at a time when the vehicle is traveling on a right-hand curve (the case of setting an alarm output), on the other hand, the respective separated sound signals (L, R, P, AL, and AR) and the sound field are set only at the right front of the vehicle, which corresponds to the traveling direction of the vehicle.

The driver of the vehicle hears sound mostly from the traveling direction of the vehicle, and attention is naturally paid in that direction, so that the driver can perform safe driving.

Note that, as for such alarm output setting, the user can perform ON/OFF setting. In a case where the alarm output is OFF, the sound field setting as shown in Figs. 14 to 17 is first performed.

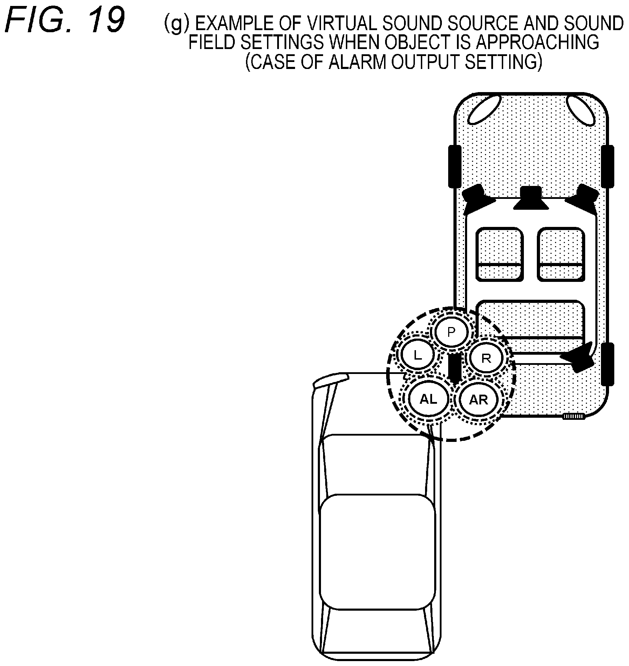

Fig. 19 shows an example process in which, in a case where an object such as another vehicle is approaching the vehicle, the virtual sound source positions and the sound field are set at the position the other vehicle is approaching.

As shown in Fig. 19, another vehicle (an object) is approaching from the rear left of the vehicle. In such a case, the respective separated sound signals (L, R, P, AL, and AR) and the sound field are set only at the rear left of the vehicle, which corresponds to the position the other vehicle (object) is approaching.

The driver of the vehicle hears sound mostly from the rear left of the vehicle, and attention is naturally paid in that direction. Thus, the driver can sense a vehicle approaching, and perform safe driving.

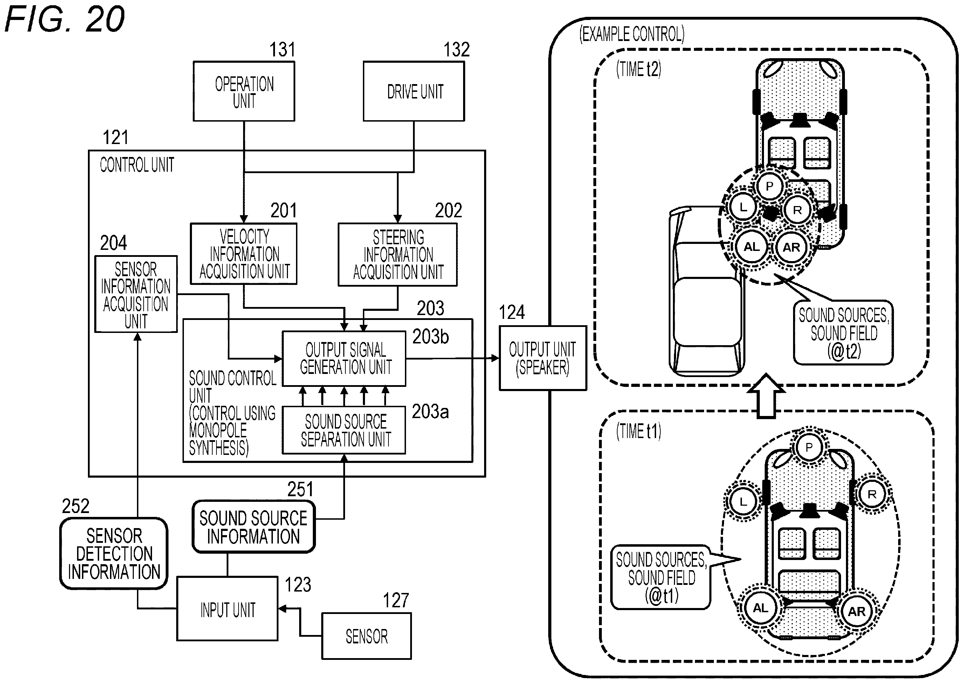

To achieve this configuration shown in Fig. 19, it is necessary to perform sound control using detection information from a sensor. An example sound control configuration using this sensor is now described, with reference to Fig. 20.

Like the control unit 121 described above with reference to Fig. 9, the control unit 121 shown in Fig. 20 includes a velocity information acquisition unit 201, a steering information acquisition unit 202, and a sound control unit 203. The control unit 121 further includes a sensor information acquisition unit 204. The sound control unit 203 includes a sound source separation unit 203a and an output signal generation unit 203b.

The velocity information acquisition unit 201 acquires information about the velocity of the mobile apparatus 100, which is the vehicle, from the operation unit 131 and the drive unit 132.

The steering information acquisition unit 202 acquires information about the steering (wheel) setting information about the mobile apparatus 100, which is the vehicle, from the operation unit 131 and the drive unit 132.

Further, the sensor information acquisition unit 204 acquires sensor detection information 252 that is detection information from a sensor 127 such as a distance sensor, for example, via the input unit 123.

Note that these pieces of information can be acquired via an in-vehicle communication network such as a controller area network (CAN) as described above, for example.

The sound control unit 203 receives an input of sound source information 251 via the input unit 123, and also receives an input of the sensor detection information 252 from the sensor information acquisition unit 204.

The sound source information 251 is a stereo sound source of two channels of L and R, like the sound source 1 described above with reference to Fig. 2, for example. For example, the sound source information 251 is media reproduction sound data such as a CD or a flash memory, Internet delivery sound data, or the like.

In accordance with the sensor detection information 252 input from the sensor information acquisition unit 204, the sound control unit 203 performs a process of controlling the virtual sound source positions and the sound field. That is, the sound control unit 203 generates output sound signals to be output to the plurality of speakers forming the output unit 124, and outputs the output sound signals. In short, the sound source separation process and the sound signal generation process described above with reference to Fig. 2 are performed. In other words, sound source control and sound field control using monopole synthesis are performed.

The process of generating the output sound signals to be output to the speakers forming the output unit 124 is performed as a process similar to the sound source separation process by the sound source separation unit 10 and the sound signal generation process by the sound signal generation unit 20 described above with reference to Fig. 2.

The sound source separation unit 203a of the sound control unit 203 receives an input of the sound source information 251 via the input unit 123, and separates the input sound source into a plurality of sound signals of different kinds. Specifically, the input sound source is separated into the five sound signals listed below, for example.
(1) L signal
(2) R signal
(3) Primary signal
(4) Ambient L signal
(5) Ambient R signal

The output signal generation unit 203b of the sound control unit 203 then performs an output signal generation process for outputting each of the above five separated sound signals to each of the speakers. This output signal generation process is performed as specific delay processes and specific amplification processes for the respective separated sound signals to be input to the respective speakers, as described above with reference to Fig. 2. In other words, control using monopole synthesis is performed.

By this process, control is performed to set virtual sound source positions of the respective separated sound signals at various positions, and further setting a sound field that can be in various regions and have various shapes.

In accordance with the sensor detection information 252 input from the sensor information acquisition unit 204, the output signal generation unit 203b of the sound control unit 203 performs a process of controlling the virtual sound source positions and the sound field. With this control, it becomes possible to perform such sound field control that the driver (user) driving the vehicle can hear sound from the direction in which he/she should pay attention, for example.

The right side of Fig. 20 shows an example of control on changes in the virtual sound source positions and the sound field in accordance with the sensor detection information 252 input from the sensor information acquisition unit 204.

At time t1, there are no approaching vehicles, and accordingly, the sound field settings are for normal driving. A sound field indicated by a substantially circular dashed line as if to surround the vehicle is set. The virtual sound source positions of the respective sound signals, which are the L signal, the R signal, the primary signal, the ambient L signal, and the ambient R signal, are set on the dashed line indicating the circular sound field.

In the state at time t2, another vehicle is approaching from the rear left. In this state, the virtual sound source positions of all the separated sound signals are set at the rear left, which is the position the other vehicle is approaching, and the sound field is also set at the rear left.

With the settings of the virtual sound source positions and the sound field, the driver hears sound mostly from the rear left, and pays attention to the rear left. As a result, the driver can sense a vehicle approaching from the rear left, and perform safe driving to avoid a collision.

### [6. Sequence of Processes to Be Performed by the Sound Signal Processing Device]

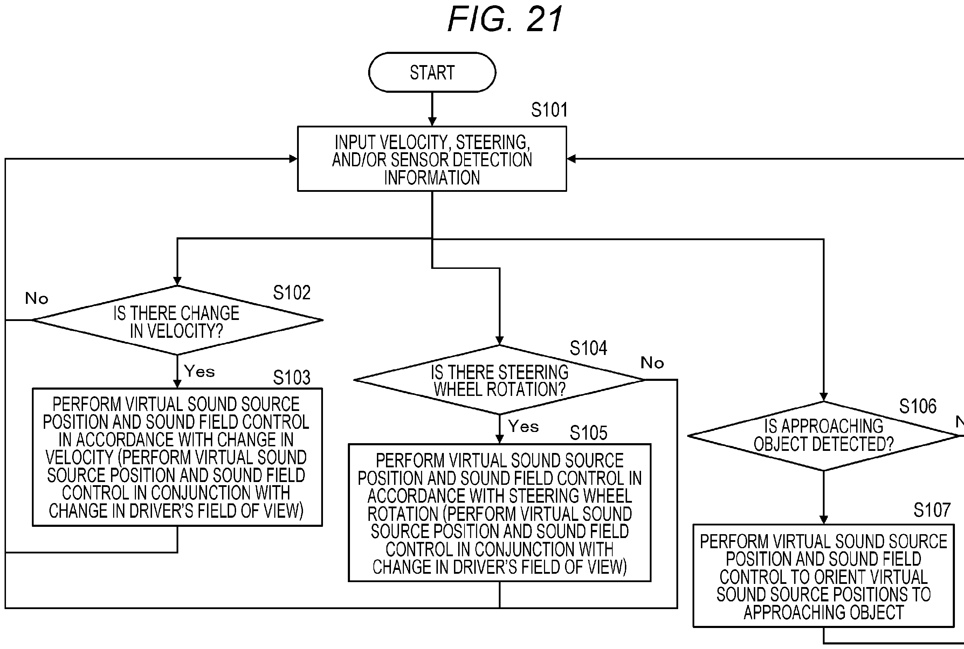

Next, the sequence of processes to be performed by the sound signal processing device according to the present disclosure is described, with reference to the flowchart shown in Fig. 21.

Note that the processes in the flow shown in Fig. 21 can be performed according to a program stored in the storage unit of the sound signal processing device, for example, under the control of the control unit that has a program execution function, such as a CPU, for example. In the description below, the processes in the respective steps of the flow shown in Fig. 21 are sequentially explained.

### (Step S101)

First, in step S101, the control unit of the sound signal processing device receives an input of at least one piece of information including velocity information, steering information, and sensor detection information about a mobile apparatus such as a vehicle.

The processes in steps S102 and S103, the processes in steps S104 and S105, and the processes in steps S106 and S107 are performed in parallel.

### (Step S102)

Next, in step S102, the control unit determines whether there is a change in velocity. If a change in the velocity of the mobile apparatus is detected, the process moves on to step S103. If any velocity change is not detected, the process returns to step S101.

### (Step S103)

Step S103 is the process to be performed in a case where a change in the velocity of the mobile apparatus is detected in step S102.

In step S103, the control unit performs control on the virtual sound source positions of the respective separated sound signals and the sound field, in accordance with the change in velocity.

This process corresponds to the process described above with reference to Figs. 9 to 13. The sound control unit 203 in the control unit 121 shown in Fig. 9 performs control to change the delay amounts at the delay units and the amplification amounts at the amplification units associated with the respective speakers and formed in the signal processing units associated with the respective separated sound signals in the output signal generation unit described above with reference to Fig. 2, in accordance with the velocity information about the mobile apparatus 100 input from the velocity information acquisition unit 201. That is, control is performed to change the virtual sound source positions and the sound field in accordance with a change in the velocity of the mobile apparatus 100.

As a result of these control processes, sound field control can be performed so that the point of view and the field of view of the driver (user) driving the vehicle can be followed, as described above with reference to Figs. 10 to 13.

### (Step S104)

In step S104, the control unit determines whether there is a change in the steering (handle) settings of the mobile apparatus 100. If a change in the steering (handle) settings of the mobile apparatus is detected, the process moves on to step S105. If any change is not detected, the process returns to step S101.

### (Step S105)

Step S105 is the process to be performed in a case where a change in the steering (handle) settings of the mobile apparatus 100 is detected in step S104.

In step S105, the control unit performs control on the virtual sound source positions of the respective separated sound signals and the sound field, in accordance with the change in the steering (wheel) settings of the mobile apparatus.

This process corresponds to the process described above with reference to Fig. 9 and Figs. 14 to 17. The sound control unit 203 in the control unit 121 shown in Fig. 9 performs control to change the delay amounts at the delay units and the amplification amounts at the amplification units associated with the respective speakers and formed in the signal processing units associated with the respective separated sound signals in the output signal generation unit described above with reference to Fig. 2, in accordance with the steering setting information about the mobile apparatus 100 input from the steering information acquisition unit 202. That is, control is performed to change the virtual sound source positions and the sound field in accordance with a change in the traveling direction of the mobile apparatus 100.

As a result of these control processes, sound field control can be performed so that the point of view and the field of view of the driver (user) driving the vehicle can be followed, as described above with reference to Figs. 14 to 17.

### (Step S106)

In step S106, the control unit determines whether there is an approaching object, on the basis of detection information from a sensor such as a distance sensor provided in the mobile apparatus 100. If an approaching object is detected, the process moves on to step S107. If any approaching object is not detected, the process returns to step S101.

### (Step S107)

Step S107 is the process to be performed in a case where an object approaching the mobile apparatus 100 is detected in step S106.

In step S107, the control unit performs control to set the virtual sound source positions of the respective separated sound signals and the sound field only in the direction of the approaching object.

This process corresponds to the process described above with reference to Figs. 18 to 20. The sound control unit 203 in the control unit 121 shown in Fig. 20 performs control to change the delay amounts at the delay units and the amplification amounts at the amplification units associated with the respective speakers and formed in the signal processing units associated with the respective separated sound signals in the output signal generation unit described above with reference to Fig. 2, in accordance with the sensor detection information input from the sensor information acquisition unit 204. That is, control is performed to set the virtual sound source positions and the sound field only at the position or the direction of the object approaching the mobile apparatus 100.

As a result of these control processes, the driver (user) driving the vehicle can sense an object approaching, and perform drive control to avoid a collision with the object, as described above with reference to Figs. 18 to 20.

### [7. Summary of the Configuration of the Present Disclosure]

Embodiments of the present disclosure have been described so far by way of specific examples. However, it is obvious that those skilled in the art can make modifications to and substitutions of the embodiments without departing from the scope of the present disclosure. That is, the present invention is disclosed in the form of examples, and the above description should not be interpreted in a restrictive manner. The claims should be taken into account in understanding the subject matter of the present disclosure.

Note that, the technology disclosed in this specification may also be embodied in the configurations described below.
(1) A sound signal processing device including:
   a behavior information acquisition unit that acquires behavior information about a mobile apparatus; and
   a sound control unit that controls output sounds from speakers disposed at a plurality of different positions in the mobile apparatus,
   in which the sound control unit performs sound field control by controlling a virtual sound source position of each separated sound signal obtained from an input sound source, in accordance with information acquired by the behavior information acquisition unit.
(2) The sound signal processing device according to (1), in which
   the behavior information acquisition unit is a velocity information acquisition unit that acquires velocity information about the mobile apparatus, and
   the sound control unit performs sound field control by controlling the virtual sound source positions of the respective separated sound signals obtained from the input sound source, in accordance with the velocity information acquired by the velocity information acquisition unit.
(3) The sound signal processing device according to (1) or (2), in which
   the behavior information acquisition unit is a steering information acquisition unit that acquires steering information about the mobile apparatus, and
   the sound control unit performs sound field control by controlling the virtual sound source positions of the respective separated sound signals obtained from the input sound source, in accordance with the steering information acquired by the steering information acquisition unit.
(4) The sound signal processing device according to any one of (1) to (3), further including
   a sensor information acquisition unit that acquires approaching object information about the mobile apparatus,
   in which the sound control unit performs sound field control by controlling the virtual sound source positions of the respective separated sound signals obtained from the input sound source, in accordance with the approaching object information acquired by the sensor information acquisition unit.
(5) The sound signal processing device according to any one of (1) to (4), in which
   the sound control unit includes:
   a sound source separation unit that receives an input of a sound source, and acquires a plurality of separated sound signals from the input sound source; and
   an output signal generation unit that includes delay units and amplification units that receive inputs of the separated sound signals generated by the sound source separation unit, and performs delay processes and amplification processes for the respective speakers and the respective separated sound signals.
(6) The sound signal processing device according to (5), in which
   the sound source separation unit generates a sound signal associated with a primary sound source that is a main sound source included in the sound source, and a sound signal associated with an ambient sound source that is not a primary sound source, and
   the output signal generation unit performs a delay process and an amplification process for each of the sound signal associated with the primary sound source and the sound signal associated with the ambient sound source, each sound signal having been generated by the sound source separation unit.
(7) The sound signal processing device according to (6), in which
   the sound control unit performs sound field control by controlling the respective virtual sound source positions of the primary sound source and the ambient sound source independently of each other, in accordance with the behavior of the mobile apparatus, the primary sound source and the ambient sound source having being obtained from the input sound source.
(8) The sound signal processing device according to (5), in which
   the sound source is a stereo sound signal having sound sources of two channels of L and R,
   the sound source separation unit generates an L sound signal and an R sound signal that are components of the sound source, a sound signal associated with a primary sound source that is a main sound source included in the sound source, and a sound signal associated with an ambient sound source that is not a primary sound source, and
   the output signal generation unit performs a delay process and an amplification process on each of the L sound signal, the R sound signal, the sound signal associated with the primary sound source, and the sound signal associated with the ambient sound source, each sound signal having been generated by the sound source separation unit.
(9) The sound signal processing device according to (8), in which
   the sound control unit performs sound field control by controlling the respective virtual sound source positions of an L sound source and an R sound source that are components of the sound source, and the primary sound source and the ambient sound source obtained from the input sound source, independently of one another, in accordance with the behavior of the mobile apparatus.
(10) The sound signal processing device according to (5), in which
   the sound source is a stereo sound signal having sound sources of two channels of L and R,
   the sound source separation unit generates an L sound signal and an R sound signal that are components of the sound source, a sound signal associated with a primary sound source that is a main sound source included in the sound source, a sound signal that is associated with an ambient L sound source and is obtained by subtracting the sound signal associated with the primary sound source from the L sound signal, and a sound signal that is associated with an ambient R sound source and is obtained by subtracting the sound signal associated with the primary sound source from the R sound signal, and
   the output signal generation unit performs a delay process and an amplification process on each of the L sound signal, the R sound signal, the sound signal associated with the primary sound source, the sound signal associated with the ambient L sound source, and the sound signal associated with the ambient R sound signal, each sound signal having been generated by the sound source separation unit.
(11) The sound signal processing device according to (10), in which
   the sound control unit performs sound field control by controlling the respective virtual sound source positions of an L sound source and an R sound source that are components of the sound source, and the primary sound source, the ambient L sound source, and the ambient R sound source obtained from the input sound source, independently of one another, in accordance with the behavior of the mobile apparatus.
(12) The sound signal processing device according to any one of (1) to (11), in which
   the sound control unit performs sound field control to set a sound field that follows a field of view of a driver of the mobile apparatus, the field of view of the driver changing with the behavior of the mobile apparatus.
(13) A mobile apparatus including:
   an operation unit that changes the behavior of the mobile apparatus;
   a behavior information acquisition unit that acquires behavior information about the mobile apparatus; and
   a sound control unit that controls output sounds from speakers disposed at a plurality of different positions in the mobile apparatus,
   in which the sound control unit performs sound field control by controlling a virtual sound source position of each separated sound signal obtained from an input sound source, in accordance with information acquired by the behavior information acquisition unit.
(14) The mobile apparatus according to (13), in which
   the operation unit is an accelerator that changes a velocity of the mobile apparatus,
   the behavior information acquisition unit is a velocity information acquisition unit that acquires velocity information about the mobile apparatus, and
   the sound control unit performs sound field control by controlling the virtual sound source positions of the respective separated sound signals obtained from the input sound source, in accordance with the velocity information acquired by the velocity information acquisition unit.
(15) The mobile apparatus according to (13) or (14), in which
   the operation unit is a steering wheel that changes a traveling direction of the mobile apparatus,
   the behavior information acquisition unit is a steering information acquisition unit that acquires steering information about the mobile apparatus, and
   the sound control unit performs sound field control by controlling the virtual sound source positions of the respective separated sound signals obtained from the input sound source, in accordance with the steering information acquired by the steering information acquisition unit.
(16) The mobile apparatus according to any one of (13) to (15), further including
   a sensor that acquires approaching object information about the mobile apparatus,
   in which the sound control unit performs sound field control by controlling the virtual sound source positions of the respective separated sound signals obtained from the input sound source, in accordance with the approaching object information acquired by the sensor.
(17) A sound signal processing method implemented in a sound signal processing device, the sound signal processing method including:
   a behavior information acquiring step in which a behavior information acquisition unit acquires behavior information about a mobile apparatus; and
   a sound controlling step in which a sound control unit controls output sounds from speakers disposed at a plurality of different positions in the mobile apparatus,
   in which the sound controlling step includes performing sound field control by controlling a virtual sound source position of each separated sound signal obtained from an input sound source, in accordance with the behavior information acquired in the behavior information acquiring step.
(18) A sound signal processing method implemented in a mobile apparatus, the sound signal processing method including:
   a step in which a sensor detects presence of an object approaching the mobile apparatus; and
   a sound controlling step in which a sound control unit controls output sounds from speakers disposed at a plurality of different positions in the mobile apparatus,
   in which the sound controlling step includes performing sound field control by controlling a virtual sound source position of each separated sound signal obtained from an input sound source, in accordance with approaching object presence information acquired by the sensor.
(19) A program for causing a sound signal processing device to perform sound signal processing including:
   a behavior information acquiring step in which a behavior information acquisition unit is made to acquire behavior information about a mobile apparatus; and
   a sound controlling step in which a sound control unit is made to control output sounds from speakers disposed at a plurality of different positions in the mobile apparatus,
   in which the sound controlling step includes causing the sound control unit to perform sound field control by controlling a virtual sound source position of each separated sound signal obtained from an input sound source, in accordance with the behavior information acquired in the behavior information acquiring step.

Further, the series of processes described in this specification can be performed by hardware, software, or a combination of hardware and software. In a case where processes are performed by software, a program in which the process sequences are recorded may be installed into a memory incorporated into special-purpose hardware in a computer that executes the program, or may be installed into a general-purpose computer that can perform various kinds of processes and execute the program. For example, the program can be recorded beforehand into a recording medium. The program can be installed from a recording medium into a computer, or can be received via a network such as a LAN (Local Area Network) or the Internet and be installed into a recording medium such as an internal hard disk.

Note that the respective processes described in this specification may not be performed in chronological order according to the description, but may be performed in parallel or independently of one another depending on the processing capability of the device performing the processes or as necessary. Also, in this specification, a system is a logical assembly of a plurality of devices, and does not necessarily mean devices with different configurations incorporated into one housing.

### INDUSTRIAL APPLICABILITY

As described above, a configuration of one embodiment of the present disclosure performs sound field control by controlling respective virtual sound source positions of a primary sound source and an ambient sound source that are separated sound signals obtained from an input sound source, in accordance with changes in the velocity and the traveling direction of an automobile.

Specifically, the configuration includes: a velocity information acquisition unit that acquires velocity information about a mobile apparatus; a steering information acquisition unit that acquires steering information about the mobile apparatus; and a sound control unit that controls output sounds from speakers disposed at a plurality of different positions in the mobile apparatus, for example. The sound control unit performs sound field control by controlling the respective virtual sound source positions of the primary sound source and the ambient sound source that are separated sound signals obtained from the input sound source, in accordance with the velocity information acquired by the velocity information acquisition unit and the steering information acquired by the steering information acquisition unit.

With this configuration, it becomes possible to perform sound field control by controlling the respective virtual sound source positions of a primary sound source and an ambient sound source that are separated sound signals obtained from an input sound source, in accordance with changes in the velocity and the traveling direction of an automobile.

### REFERENCE SIGNS LIST

- 1: Sound source
- 10: Sound source separation unit
- 11: Time-frequency transform unit (STFT)
- 12: Primary sound source probability estimation unit
- 13: Multiplication unit
- 14: Frequency-time inverse transform unit (ISTFT)
- 15, 16: Subtraction unit
- 20: Output signal generation unit
- 21: Signal processing unit
- 22: Addition unit
- 100: Mobile apparatus
- 120: Sound signal processing device
- 121: Control unit
- 122: Storage unit
- 123: Input unit
- 124: Output unit
- 131: Operation unit
- 132: Drive unit
- 141: Sound source input unit
- 142: User input unit
- 143: Sensor
- 201: Velocity information acquisition unit
- 202: Steering information acquisition unit
- 203: Sound control unit
- 204: Sensor information acquisition unit

## Claims

1. A sound signal processing device comprising:
a behavior information acquisition unit that acquires behavior information about a mobile apparatus; and
a sound control unit that controls output sounds from speakers disposed at a plurality of different positions in the mobile apparatus,
wherein the sound control unit performs sound field control by controlling a virtual sound source position of each separated sound signal obtained from an input sound source, in accordance with information acquired by the behavior information acquisition unit.

2. The sound signal processing device according to claim 1, wherein
the behavior information acquisition unit is a velocity information acquisition unit that acquires velocity information about the mobile apparatus, and
the sound control unit performs sound field control by controlling the virtual sound source positions of the respective separated sound signals obtained from the input sound source, in accordance with the velocity information acquired by the velocity information acquisition unit.

3. The sound signal processing device according to claim 1, wherein
the behavior information acquisition unit is a steering information acquisition unit that acquires steering information about the mobile apparatus, and
the sound control unit performs sound field control by controlling the virtual sound source positions of the respective separated sound signals obtained from the input sound source, in accordance with the steering information acquired by the steering information acquisition unit.

4. The sound signal processing device according to claim 1, further comprising
a sensor information acquisition unit that acquires approaching object information about the mobile apparatus,
wherein the sound control unit performs sound field control by controlling the virtual sound source positions of the respective separated sound signals obtained from the input sound source, in accordance with the approaching object information acquired by the sensor information acquisition unit.

5. The sound signal processing device according to claim 1, wherein
the sound control unit includes:
a sound source separation unit that receives an input of a sound source, and acquires a plurality of separated sound signals from the input sound source; and
an output signal generation unit that includes delay units and amplification units that receive inputs of the separated sound signals generated by the sound source separation unit, and performs delay processes and amplification processes for the respective speakers and the respective separated sound signals.

6. The sound signal processing device according to claim 5, wherein
the sound source separation unit generates a sound signal associated with a primary sound source that is a main sound source included in the sound source, and a sound signal associated with an ambient sound source that is not a primary sound source, and
the output signal generation unit performs a delay process and an amplification process for each of the sound signal associated with the primary sound source and the sound signal associated with the ambient sound source, each sound signal having been generated by the sound source separation unit.

7. The sound signal processing device according to claim 6, wherein
the sound control unit performs sound field control by controlling the respective virtual sound source positions of the primary sound source and the ambient sound source independently of each other, in accordance with a behavior of the mobile apparatus, the primary sound source and the ambient sound source having been obtained from the input sound source.

8. The sound signal processing device according to claim 5, wherein
the sound source is a stereo sound signal having sound sources of two channels of L and R,
the sound source separation unit generates an L sound signal and an R sound signal that are components of the sound source, a sound signal associated with a primary sound source that is a main sound source included in the sound source, and a sound signal associated with an ambient sound source that is not a primary sound source, and
the output signal generation unit performs a delay process and an amplification process on each of the L sound signal, the R sound signal, the sound signal associated with the primary sound source, and the sound signal associated with the ambient sound source, each sound signal having been generated by the sound source separation unit.

9. The sound signal processing device according to claim 8, wherein
the sound control unit performs sound field control by controlling the respective virtual sound source positions of an L sound source and an R sound source that are components of the sound source, and the primary sound source and the ambient sound source obtained from the input sound source, independently of one another, in accordance with a behavior of the mobile apparatus.

10. The sound signal processing device according to claim 5, wherein
the sound source is a stereo sound signal having sound sources of two channels of L and R,
the sound source separation unit generates an L sound signal and an R sound signal that are components of the sound source, a sound signal associated with a primary sound source that is a main sound source included in the sound source, a sound signal that is associated with an ambient L sound source and is obtained by subtracting the sound signal associated with the primary sound source from the L sound signal, and a sound signal that is associated with an ambient R sound source and is obtained by subtracting the sound signal associated with the primary sound source from the R sound signal, and
the output signal generation unit performs a delay process and an amplification process on each of the L sound signal, the R sound signal, the sound signal associated with the primary sound source, the sound signal associated with the ambient L sound source, and the sound signal associated with the ambient R sound signal, each sound signal having been generated by the sound source separation unit.

11. The sound signal processing device according to claim 10, wherein
the sound control unit performs sound field control by controlling the respective virtual sound source positions of an L sound source and an R sound source that are components of the sound source, and the primary sound source, the ambient L sound source, and the ambient R sound source obtained from the input sound source, independently of one another, in accordance with a behavior of the mobile apparatus.

12. The sound signal processing device according to claim 1, wherein
the sound control unit performs sound field control to set a sound field that follows a field of view of a driver of the mobile apparatus, the field of view of the driver changing with a behavior of the mobile apparatus.

13. A mobile apparatus comprising:
an operation unit that changes a behavior of the mobile apparatus;
a behavior information acquisition unit that acquires behavior information about the mobile apparatus; and
a sound control unit that controls output sounds from speakers disposed at a plurality of different positions in the mobile apparatus,
wherein the sound control unit performs sound field control by controlling virtual sound source positions of respective separated sound signals obtained from an input sound source, in accordance with information acquired by the behavior information acquisition unit.

14. The mobile apparatus according to claim 13, wherein
the operation unit is an accelerator that changes a velocity of the mobile apparatus,
the behavior information acquisition unit is a velocity information acquisition unit that acquires velocity information about the mobile apparatus, and
the sound control unit performs sound field control by controlling the virtual sound source positions of the respective separated sound signals obtained from the input sound source, in accordance with the velocity information acquired by the velocity information acquisition unit.

15. The mobile apparatus according to claim 13, wherein
the operation unit is a steering wheel that changes a traveling direction of the mobile apparatus,
the behavior information acquisition unit is a steering information acquisition unit that acquires steering information about the mobile apparatus, and
the sound control unit performs sound field control by controlling the virtual sound source positions of the respective separated sound signals obtained from the input sound source, in accordance with the steering information acquired by the steering information acquisition unit.

16. The mobile apparatus according to claim 13, further comprising
a sensor that acquires approaching object information about the mobile apparatus,
wherein the sound control unit performs sound field control by controlling the virtual sound source positions of the respective separated sound signals obtained from the input sound source, in accordance with the approaching object information acquired by the sensor.

17. A sound signal processing method implemented in a sound signal processing device, the sound signal processing method comprising:
a behavior information acquiring step in which a behavior information acquisition unit acquires behavior information about a mobile apparatus; and
a sound controlling step in which a sound control unit controls output sounds from speakers disposed at a plurality of different positions in the mobile apparatus,
wherein the sound controlling step includes performing sound field control by controlling a virtual sound source position of each separated sound signal obtained from an input sound source, in accordance with the behavior information acquired in the behavior information acquiring step.

18. A sound signal processing method implemented in a mobile apparatus, the sound signal processing method comprising:
a step in which a sensor detects presence of an object approaching the mobile apparatus; and
a sound controlling step in which a sound control unit controls output sounds from speakers disposed at a plurality of different positions in the mobile apparatus,
wherein the sound controlling step includes performing sound field control by controlling a virtual sound source position of each separated sound signals obtained from an input sound source, in accordance with approaching object presence information acquired by the sensor.

19. A program for causing a sound signal processing device to perform sound signal processing including:
a behavior information acquiring step in which a behavior information acquisition unit is made to acquire behavior information about a mobile apparatus; and
a sound controlling step in which a sound control unit is made to control output sounds from speakers disposed at a plurality of different positions in the mobile apparatus,
wherein the sound controlling step includes causing the sound control unit to perform sound field control by controlling a virtual sound source position of each separated sound signal obtained from an input sound source, in accordance with the behavior information acquired in the behavior information acquiring step.
